# EUROPEAN PATENT APPLICATION

(11) **EP 1 615 414 A2**
(43) Date of publication of application: **11.01.2006**
(21) Application number: 05014995.4
(22) Date of filing: 11.07.2005
(51) Int. Cl.: H04M 3/56

(54) **Sound apparatus and teleconference system**

(30) Priority: 09.07.2004 JP 2004203636; 05.11.2004 JP 2004322840; 05.11.2004 JP 2004322843; 05.11.2004 JP 2004322844
(71) Applicant: YAMAHA CORPORATION, Hamamatsu-shi Shizuoka-ken (JP)
(72) Inventor: Tamiya, Kenichi, Hamamatsu-shi Shizuoka-ken (JP); Kushida, Koji, Hamamatsu-shi Shizuoka-ken (JP); Fuji, Shigeki, Hamamatsu-shi Shizuoka-ken (JP)
(74) Representative: Wagner, Karl H.

(57) **Abstract**

A sound apparatus includes: a sound output that forms sound waves having opposite phases in a front direction and a rear direction, respectively; a front microphone that collects the sound wave formed in the front direction; a rear microphone that collects the sound wave formed in the rear direction; and a signal processor that combines the signal collected by the front microphone and the signal collected by the rear microphone and outputs the resultant signal.

## Description

### BACKGROUND OF THE INVENTION

This invention relates to a sound apparatus including loudspeakers and microphones in one piece, the sound apparatus for canceling the round of voice into the microphone from the loudspeaker and a teleconference system using the sound apparatus.

Various teleconference systems for connecting remote conference rooms as voice (and video) and executing teleconference are proposed. In the teleconference system, microphones for collecting speaking of attendants at the conference and loudspeakers for sounding voice in the associated conference room are installed in each conference room. As the installation mode of the microphones and the loudspeakers, various modes such as a mode in which microphones are provided in a one-to-one-correspondence with the attendants, a mode in which a microphone for the whole conference room is provided, a mode in which loudspeakers or earphones are provided in a one-to-one-correspondence with the attendants, and a mode in which a loudspeaker for the whole conference room is provided are possible.

The mode in which the microphone and the loudspeaker for the whole conference room are provided as shown in JP-A-10-136100 is advantageous for the cost because the flexibility is high and installation is easy because it is not necessary to match the number of the attendants at the conference unlike the mode in which microphones and loudspeakers are provided in a one-to-one-correspondence with the attendants or the number of the attendants at the conference is not limited by the number of the microphones and loudspeakers provided in a one-to-one-correspondence with the attendants.

In addition to presence as a conference, if voice is operatively associated with video in a videoconference, voice can be generated from the direction of video and the attendants can speak toward the direction, so that a teleconference can be conducted in a natural atmosphere.

However, the loudspeaker sounds voice to the whole conference room and the microphone collects voice (sound) from the whole conference room and thus a loop in which the voice sounded from the loudspeaker is again collected by the microphone occurs; howling of producing an oscillation sound entirely different from the voice of speaking and an echo wherein unnecessary reverberation occurs in the voice of speaking or sound is repeated occurs; this is a problem.

Hitherto, to remove such howling and echo, an apparatus provided with a digital processing section in audio circuitry for simulating voice rounding into a microphone from a loudspeaker and canceling the voice, thereby canceling howling and echo has been proposed. (For example, refer to JP-A-05-063609.)

However, the echo cancel apparatus for performing digital processing has disadvantages in that the circuit configuration becomes complicated and it is difficult to set a simulation model (parameter) matched with the installation condition of a loudspeaker and.a microphone.

### SUMMARY OF THE INVENTION

It is an object of the invention to provide a sound apparatus capable of canceling howling and echo according to a simple configuration without including a complicated and high-performance digital processor, etc., and a teleconference system using the sound apparatus.

In order to solve the aforesaid object, the invention is characterized by having the following arrangement.
(1) A sound apparatus comprising:
   a sound output that forms sound waves having opposite phases in a front direction and a rear direction, respectively;
   a front microphone that collects the sound wave formed in the front direction;
   a rear microphone that collects the sound wave formed in the rear direction; and
   a signal processor that combines the signal collected by the front microphone and the signal collected by the rear microphone and outputs the resultant signal.
(2) The sound apparatus according to (1), wherein the signal processor adjusts the level or frequency characteristic of at least one of the signal collected by the front microphone and the signal collected by the rear microphone.
(3) A sound apparatus comprising:
   a sound output that forms sound waves having opposite phases in a front direction and a rear direction, respectively; and
   a microphone unit that includes a front microphone placed forward, a rear microphone placed backward, and a sound insulating layer placed between the front microphone and the rear microphone,
   wherein the sound output and said microphone unit are combined in a panel shape.
(4) The sound apparatus according to (3), wherein the sound output comprises a flat capacitor loudspeaker having a flat diaphragm, and each of the front microphone and the rear microphone comprises a flat capacitor microphone having a flat diaphragm.
(5) The sound apparatus according to (4), wherein
   the flat loudspeaker comprises two layers of a front flat loudspeaker and a rear flat loudspeaker,
   the front flat loudspeaker is placed so that a flat diaphragm of the front flat loudspeaker becomes the same plane as the flat diaphragm of the front microphone, and
   the rear flat loudspeaker is placed so that a flat diaphragm of the rear flat loudspeaker becomes the same plane as the flat diaphragm of the rear microphone.
(6) The sound apparatus according to (3) further comprising a signal processor that combines the signal collected by the front microphone and the signal collected by the rear microphone and outputs the resultant signal.
(7) The sound apparatus according to (6), wherein the signal processor adjusts the level or frequency characteristic of at least one of the signal collected by the front microphone and the signal collected by the rear microphone.
(8) A teleconference system, wherein a sound apparatus according to (1), (6), or (7) is installed in each of rooms and the sound apparatus are connected so that an output signal of the signal processor of one sound apparatus is input to voice output of another sound apparatus.
(9) An acoustic apparatus comprising:
   a main unit that includes a main acoustic output unit which converting an input signal into a sound wave and reproduce the sound wave, and a main sound pickup which collects a sound wave propagated from an installation space of the main unit and outputs a signal corresponding to the collected sound wave;
   a sub unit that includes a sub acoustic output unit which reproduces a sound wave which is in opposite phase to that of the sound wave reproduced by the main acoustic output unit, and a sub sound pickup which collects a sound wave propagated from an installation space in which the sub unit is installed and a sound wave from the installation space of the main unit is not propagated and outputs a signal corresponding to the sound wave collected by the sub sound pickup;
   a signal combining unit that combines the signal output form the main sound pickup and the signal output from the sub sound pickup and outputs a resultant signal thereof.
(10) An acoustic apparatus comprising:
   a main unit that includes a main acoustic output unit which converting an input signal into a sound wave and reproduce the sound wave, and a main sound pickup which collects a sound wave propagated from an installation space of the main unit and outputs a signal corresponding to the collected sound wave;
   a sub unit that includes a sub acoustic output unit which reproduces a sound wave which is in same phase to that of the sound wave reproduced by the main acoustic output unit, and a sub sound pickup which collects a sound wave propagated from an installation space in which the sub unit is installed and a sound wave from the installation space of the main unit is not propagated and outputs a signal corresponding to the sound wave collected by the sub sound pickup;
   a signal combining unit that combines the signal output form the main sound pickup and the signal output from the sub sound pickup and outputs a resultant signal thereof.
(11) An acoustic apparatus comprising:
   a main unit that includes a main acoustic output unit which converting an input signal into a sound wave and reproduce the sound wave, and a main sound pickup which collects a sound wave propagated from an installation space of the main unit and outputs a signal corresponding to the collected sound wave;
   a sub unit that includes a sub acoustic output unit which reproduces a sound wave which is in same phase to that of the sound wave reproduced by the main acoustic output unit, and a sub sound pickup which collects a sound wave propagated from an installation space in which the sub unit is installed and a sound wave from the installation space of the main unit is not propagated and outputs a signal corresponding to the sound wave collected by the sub sound pickup;
   a signal combining unit that outputs a differential signal of the signal output from the main sound pickup and the signal output from the sub sound pickup.
(12) An acoustic device comprising:
   a flat capacitor type device that includes a flat plate shaped fixed electrode and a flat plate shaped diaphragm arranged opposite to the fixed electrode;
   a sound reproducing signal amplifier that amplifies a first signal and applies the amplified first signal to the fixed electrode to vibrate the diaphragm;
   a sound pickup signal amplifier that amplifies and outputs a second signal output from the fixed electrode; and
   a changeover switch for alternatively connecting the fixed electrode to the sound reproducing signal amplifier and the sound pickup signal amplifier,
   wherein when the changeover switch connects the fixed electrode to the sound reproducing signal amplifier, the flat capacitor type device functions as a loudspeaker which reproduces sound waves by vibration of the diaphragm corresponding to the first signal, and
   wherein when the changeover switch connects the fixed electrode to the sound pickup signal amplifier, the flat capacitor type device functions as a microphone which outputs, to the sound pickup amplifier, the second signal generated when electrostatic capacitance of the fixed electrode is changed by vibration of the diaphragm in response to a sound wave collected by the diaphragm.
(13) The acoustic device according to (12) further comprising a bias unit which applies different bias voltages to the diaphragm in case that the changeover switch connects the fixed electrode to the sound reproducing signal amplifier, and in case that the changeover switch connects the fixed electrode to the sound pickup signal amplifier.
(14) An acoustic input/output apparatus comprising:
   a plurality of acoustic devices according to (12) or (13), wherein flat capacitor type devices of the plurality of acoustic devices are arranged in a panel shape; and
   a controller that outputs control signals to the plurality of changeover switches to operate the plurality of flat capacitor type devices as a microphone or a loudspeaker, respectively.
15. The acoustic input/output apparatus according to (14), wherein the controller changes numerical quantity and arrangement of the flat capacitor type devices functioning as the microphone in accordance with a volume or a position of voice sound which is detected by the flat capacitor type devices functioning as the microphone.
(16) A remote conference system comprising:
   a plurality of acoustic input/output apparatuses according to (14) which are arranged in different spaces, respectively, and connected in such a manner that an output signal of the sound pickup amplifier in each acoustic input/output apparatus is input as an input signal of the sound release amplifier of another acoustic device.
(17) The remote conference system according to (16), wherein
   each of the acoustic input/output apparatus includes a pattern storage for storing at least one concord pattern associated with an arranging pattern of the flat capacitor type devices functioning as microphones and flat capacitor type devices functioning as loudspeakers,
   the remote conference system comprises a pattern selector for selecting the arranging pattern,
   the controller of one of the acoustic input/output apparatuses, when the arranging pattern of the one is selected by the pattern selector, notifies the selected arranging pattern of the other of the acoustic input/output apparatuses and sets up the flat capacitor type devices of the other to the selected arranging pattern, and
   when the other of the acoustic input/output apparatuses receives the notification from the one, the other of the acoustic input/output apparatuses sets up the flat capacitor type device to the concord pattern associated with the selected arranging pattern.
(18) An acoustic device comprising:
   a pair of flat capacitor type devices, each including a flat plate shaped fixed electrode and a flat plate shaped diaphragm arranged opposed to the fixed electrode;
   an acoustically insulating layer that is disposed between the pair of flat capacitor type devices to suppress an acoustic propagation therebetween;
   a sound release signal amplifier that amplifies a first signal and applies the amplified first signal to the fixed electrode of one of the flat capacitor type devices and amplifies a second signal in opposite phase to the first input signal and applies the amplified second signal to the fixed electrode of the other flat capacitor type device to vibrate the fixed electrodes;
   a sound pickup signal amplifier that combines third signals amplifies and.output the combined signals; and
   a changeover switch for alternatively connecting the fixed electrodes to the sound reproducing signal amplifier and the sound pickup signal amplifier,
   wherein when the changeover switch connects the fixed electrodes to the sound reproducing signal amplifier, the flat capacitor type devices function as loudspeakers which reproduce sound waves having opposite phases by vibrations of the diaphragms respectively corresponding to the first and second signals, and
   wherein when the changeover switch connects the fixed electrodes to the sound pickup amplifier, the flat capacitor type devise function as microphones which output, to the sound pickup amplifier, the third signals which are respectively generated when electrostatic capacitance of each fixed electrode is changed by vibration of each diaphragm in response to a sound wave collected by the diaphragm.
(19) An acoustic device comprising:
   a pair of flat capacitor type devices, each including a flat plate shaped fixed electrode and a flat plate shaped diaphragm arranged opposed to the fixed electrode;
   an acoustically insulating layer that is disposed between the pair of flat capacitor type devices to suppress an acoustic propagation therebetween;
   a sound release signal amplifier that amplifies a first signal and applies the amplified first signal to the fixed electrodes;
   a sound pickup signal amplifier that combines second and third signals amplifies and output the combined second and third signals; and
   a changeover switch for alternatively connecting the fixed electrodes to the sound reproducing signal amplifier and the sound pickup signal amplifier,
   wherein when the changeover switch connects the fixed electrodes to the sound reproducing signal amplifier, the flat capacitor type devices function as loudspeakers which reproduce sound waves having same phases by vibrations of the diaphragms respectively corresponding to the first signal, and
   wherein when the changeover switch connects the fixed electrodes to the sound pickup amplifier, .the flat capacitor type devise...function as microphones which output, to the sound pickup amplifier, the second signal generated when electrostatic capacitance of the fixed electrode of one of the flat capacitor type device is changed by vibration of the diaphragm in response to a first sound wave collected by the diaphragm, and output, to the sound pickup amplifier, the third signal generated when electrostatic capacitance of the fixed electrode of the other flat capacitor type device is changed by vibration of the diaphragm in response to a second sound wave having an opposite phase to the first sound wave and collected by the diaphragm.
(20) An acoustic device comprising:
   a pair of flat capacitor type devices, each including a flat plate shaped fixed electrode and a flat plate shaped diaphragm arranged opposed to the fixed electrode;
   an acoustically insulating layer that is disposed between the pair of flat capacitor type devices to suppress an acoustic propagation therebetween;
   a sound release signal amplifier that amplifies a first signal and applies the amplified first signal to the fixed electrodes;
   a sound pickup signal amplifier that outputs a differential signal of a second signal output from the fixed electrode of one of the flat capacitor type device and a third signal output from the fixed electrode of the other capacitor type device;
   combines third signals amplifies and output the combined signals; and
   a changeover switch for alternatively connecting the fixed electrodes to the sound reproducing signal amplifier and the sound pickup signal amplifier,
   wherein when the changeover switch connects the fixed electrodes to the sound reproducing signal amplifier, the flat capacitor type devices function as loudspeakers which reproduce sound waves having same phases by vibrations of the diaphragms respectively corresponding to the first signal, and
   wherein when the changeover switch connects the fixed electrodes to the sound pickup amplifier, the flat capacitor type devise function as microphones which output, to the sound pickup amplifier, the second and third signals which, are respectively generated when electrostatic capacitance of each fixed electrode is changed by vibration of each diaphragm in response to a sound wave collected by the diaphragm.

The sound wave formed in the front direction by the sound output is rounded into the front microphone and is collected therein and the sound wave (of the opposite phase) formed in the rear direction is rounded into the rear microphone and is collected therein. Therefore, the round sound of the output signal of the signal processor for combining the signal collected by the front microphone and the signal collected by the rear microphone and outputting the resultant signal is canceled. On the other hand, the speaking voice of an attendant at the conference or the like comes from one direction (front direction) and thus is collected only by the microphone provided in the one direction and is output without being canceled if it is combined.

The sound output and the microphone unit are combined in a panel shape as described above, whereby the sound apparatus including the microphones and the sound output (loudspeakers) can be configured movably like a white board, for example. If the panel is formed in white, it can also be used as a screen of a projection television and can also be used with a videoconference system.

The flat capacitor microphone is back and forth symmetric and thus outputs sound waves having the same waveform and the opposite phases in the front direction and the rear direction. Since the vibration is face vibration, the microphone has the directivity in the front direction, and round into the microphone installed just aside that microphone is a little.

In the invention, two layers of flat loudspeakers are provided, whereby vibration of the rear flat loudspeaker excites the diaphragm of the front flat loudspeaker and the sound pressure level can be doubled. The front flat loudspeaker and the rear flat loudspeaker are placed just aside the front microphone and the rear microphone respectively, so that round of loudspeaker voice is minimized.

In the invention, one or more sound apparatus are installed in each of separate conference rooms and the sound apparatus are connected. In the connection mode, the output signal of the signal processor of one sound apparatus is connected to the voice output of another sound apparatus through transmission means. For three or more sound apparatus to make up the teleconference system, output of the signal processor of one sound apparatus is connected to the voice output means of two or more sound apparatus in common. Accordingly, howling and echo are canceled in each apparatus and a smooth teleconference is made possible.

The transmission means may be any such as an audio cable, a local area network, a telephone line, the Internet, radio communications, or infrared communications.

According to the invention, while voice of the associated party is produced to the whole room to produce presence of a conference, rounding the voice into the speaking collection microphone to produce howling or echo is prevented, and a teleconference with presence can be realized.

### BRIEF DESCRIPTION OF THE DRAWINGS

FIGS. 1A to 1C are drawings to show the schematic configuration of a panel sound apparatus of an embodiment of the invention;
FIG. 2 is a drawing to describe the structure of capacitor microphones and capacitor loudspeakers and round of loudspeaker signals;
FIG. 3 is a drawing to describe an electric circuit of the panel sound apparatus of the embodiment of the invention;
FIG. 4 is a drawing to show an example of electric connection in a teleconference system using the two panel sound apparatus;
FIG. 5 is a drawing to show a panel sound apparatus for a videoconference system using a large number of flat loudspeakers and a large number of microphone units in combination; and
FIG. 6 is a drawing to describe the installation mode of the panel sound apparatus.
Figs. 7A and 7B are block diagrams which show a schematic configuration of an acoustic apparatus relating to a second embodiment of the invention.
Fig. 8 is a block diagram which shows a schematic configuration of a remote conference system relating to a second embodiment of the invention.
Figs.9A and 9B are conceptual diagrams which show an installation example of a panel sound apparatus.
Fig. 10 is a view which shows an example of electric connection in a remote conference system using two units of panel sound apparatuses.
Fig. 11 is a block diagram which shows a schematic configuration of a remote conference system relating to a third embodiment of the invention.
Fig. 12 is a view which shows electric connection in the remote conference system relating to the third embodiment, which is configured by use of two units of panel sound apparatuses.
Fig.13 is a block diagram which shows a schematic configuration of a remote conference system relating to a fourth embodiment of the invention.
Fig. 14 is a view which shows electric connection in the remote conference system relating to the fourth embodiment, which is configured by use of two units of panel sound apparatuses.
Figs. 15A and 15B are cross sectional views which show a schematic configuration of a capacitor type device which configures an acoustic device relating to a fifth embodiment of the invention.
Figs. 16A though 16D are block diagrams which show a schematic configuration in case of using the capacitor type device as a loudspeaker and in case of using the capacitor type device as a microphone.
Fig. 17 is a block diagram which shows a schematic configuration of an acoustic device.
Fig. 18 is a block diagram which showed a schematic configuration of an acoustic input and output apparatus.
Fig. 19 shows one example of a front view of the acoustic input and output apparatus.
Fig. 20 is a block diagram which shows a schematic configuration of a remote conference system according to the fifth embodiment of the invention.
Figs. 21A and 21 B are views which shows a control example of microphone arrangement at the time of detecting a speaker.
Fig. 22 is a view which shows a loudspeaker arrangement control example by detection of a position of a speaker.
Figs. 23A and 23B are block diagrams which show a schematic configuration of an acoustic device.
Fig. 24 is a block diagram which showed a schematic configuration of an acoustic input and output apparatus.
Figs. 25A and 25B are front elevation view and a top view of the acoustic input and output apparatus.
Fig. 26 is a block diagram which shows a schematic configuration of a remote conference system according to an embodiment of the invention.
Fig. 27A and 27B are views which show a control example of microphone arrangement at the time of detecting a speaker.
Figs. 28A and 28B are views which show a loudspeaker arrangement control example by detection of a position of a speaker.
Fig. 29 is a block diagram which shows a schematic configuration of an acoustic device which is different from that of Figs. 23A.
Fig. 30 is a block diagram which shows a schematic configuration of an acoustic device which is different from those of Figs. 23A and 29.

### DETAILED DESCRIPTION OF PREFERRED EMBODIMENTS

### First Embodiment

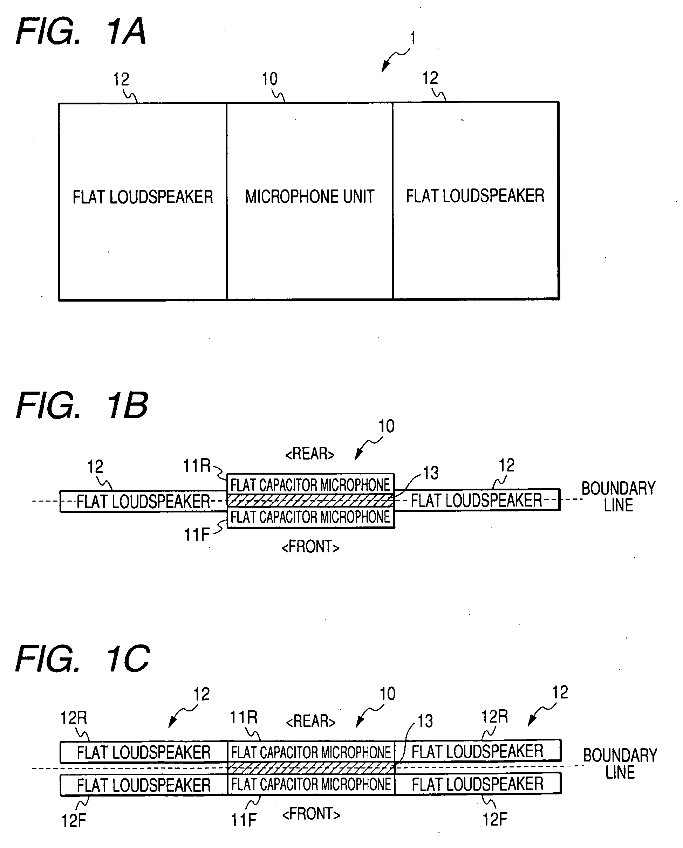

FIGS. 1A to 1C are drawings to show the schematic configuration of a panel sound apparatus 1 of a first embodiment of the invention. FIG. 1A is a front view (view from the front) and FIG. 1B and FIG. 1C are plan views (views from the top) of modifications.

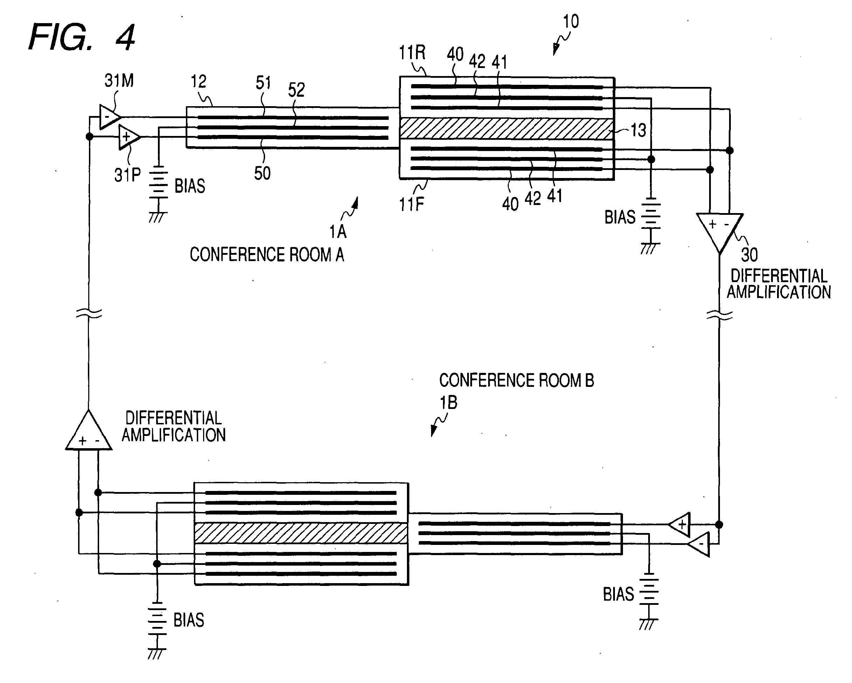

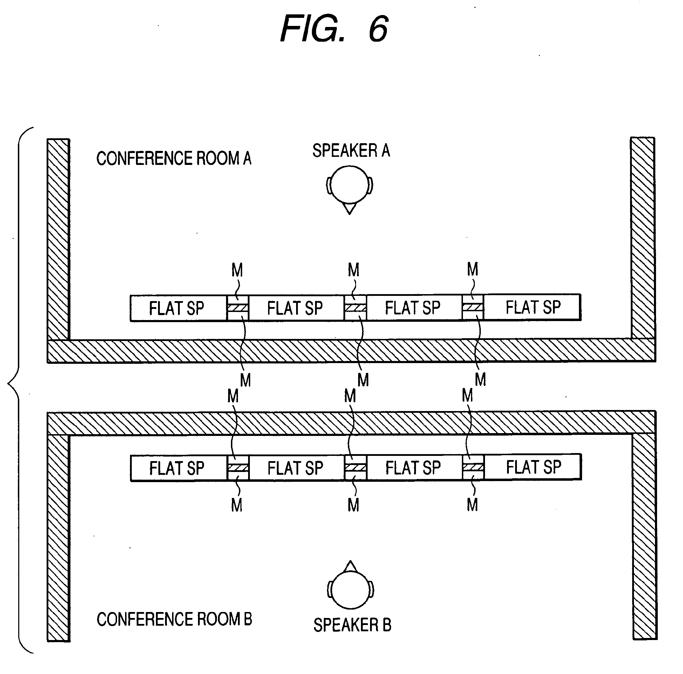

The panel sound apparatus 1 is used with a teleconference system as shown in FIGS. 4 and 6; one is installed in each conference room.

The panel sound apparatus 1 includes a microphone unit 10 having two front and rear flat capacitor microphones (front microphone 11 F and rear microphone 11 R) and flat loudspeakers 12, which are joined in one piece in a panel shape. For example, preferably the panel sound apparatus 1 is configured as a self-supporting apparatus such as a white board. The number of the microphone units 10 and the shape thereof and the number of the flat loudspeakers 12 and the shape thereof are not limited to those in the drawing.

In the embodiment, a capacitor loudspeaker is used as the flat loudspeaker, but any loudspeaker may be used if it outputs the same signal in opposite phases to the front and the rear.

As shown in FIG. 1B and FIG. 1C, the microphone unit 10 is made up of the front microphone 11F of a flat capacitor microphone placed toward the front, the rear microphone 11R of a flat capacitor microphone placed toward the rear, and a sound insulating layer 13 for shutting off propagation of voice (sound) between the front microphone 11F and the rear microphone 11R; the front microphone 11F and the rear microphone 11R are placed back to back with the sound insulating layer 13 between. The sound insulating layer 13 may be made of a sound absorbing material of urethane, etc., a rigid body of a steel plate, etc., for example. The center of the sound insulating layer 13 becomes the front and rear boundary line (front and rear boundary face) of the panel sound apparatus 1.

On the other hand, the flat loudspeaker 12 may be provided as one layer so that the diaphragm matches the panel front and rear boundary face as shown in FIG. 1B or two layers of the flat loudspeaker may be provided as front and rear loudspeakers so that diaphragm faces match the diaphragms of the front microphone 11F and the rear microphone 11R (so as to become the same plane), respectively, as shown in FIG. 1C. A space is provided between the two layers of the flat loudspeaker so as to allow sound to pass through.

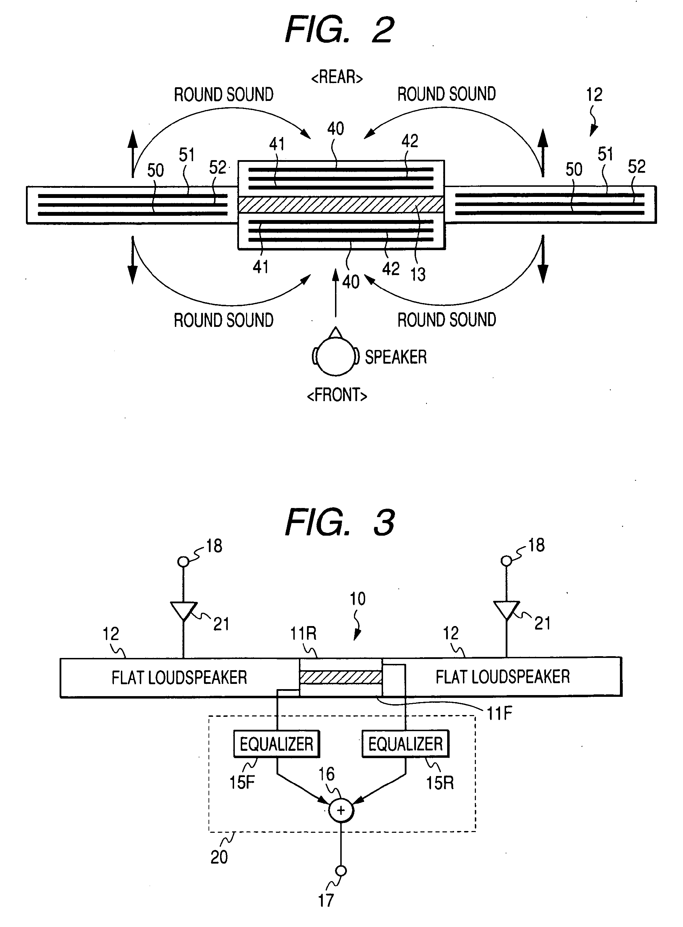

FIG. 2 is a drawing to describe the configuration of the microphone unit 10 and the flat loudspeakers 12 and audio signals collected by the front microphone 11F and the rear microphone 11R.

In the figure, the front microphone 11F and the rear microphone 11R are flat capacitor microphones; a diaphragm 42 made of a conductive thin film having no air permeability is provided between fixed electrodes 40 and 41 of two layers each like a mesh and a bias voltage is applied to the diaphragm 42. The diaphragm 42 and the fixed electrodes 40 and 41 are electrostatically coupled and a capacitance responsive to the distance from the diaphragm 42 occurs between the fixed electrodes 40 and 41 as the bias voltage is applied to the diaphragm 42. When an external voice wave comes, the diaphragm 42 is vibrated by the voice wave, causing the distance between the diaphragm 42 and the fixed electrode 40, 41 to change. Thus, as the capacitance occurring in the fixed electrode 40, 41 changes, a minute current occurs and flows through a resistance element of a high resistance value, thereby producing a signal voltage, which is then amplified by a differential amplifier, whereby the coming voice wave can be taken out as a voice (audio) signal.

The flat loudspeaker 12 is a flat capacitor loudspeaker; a diaphragm 52 made of a conductive thin film having no air permeability is provided between fixed electrodes (positive and negative electrodes) 50 and 51 of two layers each like a mesh and a bias voltage is applied to the diaphragm 52 and an audio signal voltage is applied to the fixed electrode, thereby vibrating the diaphragm 52 for outputting an audio signal as a sound. Since the front and the rear of the flat diaphragm 52 are likewise open through the mesh electrodes 50 and 51, a voice wave of a positive phase is formed and output in the front direction and a voice wave of an opposite phase is formed and output in the rear direction under the conditions of the same amplitude, frequency characteristic, etc., as those at the front.

Since the flat loudspeaker 12 forms a voice wave as the flat diaphragm 52 is vibrated, the formed voice wave becomes a plane wave and has directivity in the front direction. Therefore, the round of voice into the microphone unit 10 placed almost just beside the flat loudspeaker 12 can be lessened.

Further, two layers of a front loudspeaker 12F and a rear loudspeaker 12R are provided as the flat loudspeakers 12 as shown in FIG. 1C, whereby the sound pressure of the output voice wave can be doubled for generating a large sound and it is also made possible to minimize the round of voice into the flat capacitor microphones 11F and 11R adjacent to the loudspeakers. That is, the voice wave generated by the front flat loudspeaker 12F is rounded into the front microphone 11F, but the front microphone 11F and the front loudspeaker 12F are placed in the positional relationship just aside each other with the diaphragms existing on the same plane, so that the front microphone 11F is placed at the position where the directivity of the voice wave generated by the front loudspeaker 12F is the weakest, and the round of voice into the front microphone 11F can be minimized. The voice generated by the rear loudspeaker 12R on the front side excites the diaphragm of the front loudspeaker 12F for growing the sound energy, but the voice wave generated by the rear loudspeaker 12R is not rounded directly into the front microphone 11F in the slanting direction. The relationship between the rear microphone 11R and the rear loudspeaker 12R is similar to the relationship between the front microphone 11F and the front loudspeaker 12F described above.

In FIG. 2, the voice wave of the positive phase formed at the front by the flat loudspeaker 12 (loudspeaker voice) is propagated in the front direction and is also collected in the front microphone 11F as round sound. On the other hand, the voice wave of the opposite phase formed at the rear by the flat loudspeaker 12 (loudspeaker voice) is propagated in the rear direction and is also collected in the rear microphone 11R as round sound.

If the voice signal generated as the diaphragm of the same flat loudspeaker 12 is vibrated is collected in the two microphones 11F and 11R placed in the positional relationship symmetrical with respect to the front and rear boundary face, it can be said that the signal waveforms are signal waveforms of opposite phases almost canceling each other. The factor hindering the symmetry of the waveforms is the difference between the front and rear spatial shapes of the installation location of the panel sound apparatus 1. Therefore, the output signal of the front microphone 11F and that of the rear microphone 11R are added and combined together, whereby the round voice into the flat loudspeaker 12 can be canceled.

On the other hand, the panel sound apparatus 1 generally is installed by the wall of a conference room and the speaking voice of a speaker (attendant at the conference) arrives only from the front direction and is collected only in the front microphone 11F (does not arrive at the rear microphone 11R because the sound insulating layer 13 exists). Therefore, the speaking voice of the speaker and the loudspeaker voice of the positive phase are collected in the front microphone 11F and only the loudspeaker voice of the opposite phase is input to the rear microphone 11R.

Therefore, when the output signal of the front microphone 11F and that of the rear microphone 11R are added and combined together, the loudspeaker voices colleted in both the microphones in the opposite phases are canceled and substantially round of voice from the loudspeaker does not exist and only the speaking voice of the speaker is taken out.

Since the round sound from the loudspeaker is canceled and is eliminated, the signal loop of the microphone to the loudspeaker to the microphone is cut and howling and echo are prevented from occurring.

There may be a slight signal level or frequency characteristic difference between the loudspeaker voice collected in the front microphone 11F and that collected in the rear microphone 11R because of the difference between the front and rear spatial shapes of the installation location described above or the like. Also in this case, the loudspeaker voice is attenuated to a sufficiently low level and thus oscillation is prevented from occurring for causing howling or echo to such a degree that the attendant at the conference is nervous about the echo does not occur, but the loudspeaker voice is not completely canceled. Thus, to completely cancel the remaining loudspeaker voice, further an equalizer 15 is connected to each microphone 11 in the panel sound apparatus 1 of the embodiment.

FIG. 3 is a drawing to describe an electric circuit of the panel sound apparatus 1. Equalizers 15F and 15R are connected to the front microphone 11F and the rear microphone 11 R respectively. The equalizer 15R connected to the rear microphone 11R is a circuit for correcting the frequency characteristic and the level so that the waveform of the loudspeaker voice output by the rear microphone 11R completely matches that of the loudspeaker voice output by the front microphone 11F.

The equalizer 15F connected to the output of the front microphone 11F improves the sound quality of the voice (audio) signal provided by collecting the speaking voice of a speaker. The equalizer 15R corrects the level and the frequency characteristic so that the loudspeaker voice collected by the rear microphone 11R becomes the same signal as the loudspeaker voice of the front microphone 11F passing through the equalizer 15F (in the opposite phase).

In FIG. 3, the output signals of the front microphone 11F and the rear microphone 11R output from the equalizers 15F and 15R are added and combined together by an adding circuit 16 and then the resultant signal is output through an output terminal 17 to the associated apparatus. In the embodiment, the equalizers 15F and 15R and the adding circuit 16 make up a signal combining circuit 20 (signal processor). However, to simplify the configuration, the equalizers 15F and 15R are not required and only a volume for adjusting the level may be provided.

A voice (audio) signal from the associated apparatus is input to each of the two flat loudspeakers 12 through an input terminal 18 and a voltage amplifier 21. The voice signal input to the two flat loudspeakers 12 shown in the figure need not necessarily be the same signal. That is, signals sent from separate panel sound apparatus 1 or signals collected by separate microphone units of the same panel sound apparatus 1 may be input to the flat loudspeakers 12.

FIG. 4 is a drawing to show an example of electric connection in a teleconference system using the two panel sound apparatus 1. To simplify the description, the equalizers 15F and 15R shown in FIG. 3 are not shown in FIG. 4. One panel sound apparatus 1A is installed in a conference room A. The other panel sound apparatus 1 B is installed in a conference room B. The panel sound apparatus 1 A will be discussed. A common bias voltage is applied to diaphragms 42F and 42R of the front microphone 11F and the rear microphone 11R, and fixed electrodes 40F and 40R on the sound collection side are connected to a noninverting input terminal of a differential amplifier 30 in common. Fixed electrodes 41F and 41R on the sound insulating layer 13 side are connected to an inverting input terminal of the differential amplifier 30 in common. The fixed electrodes 40F and 40R and the fixed electrodes 41F and 41R are connected to the terminals of the differential amplifier 30 in common, whereby the signals of the front microphone 11F and the rear microphone 11R are added and combined together and the loudspeaker voice rounded from the flat loudspeaker 12 is canceled. Only the voice signal of the speaker collected by the front microphone 11F is output from the differential amplifier 30. The voice signal is supplied to a flat loudspeaker in the conference room B through predetermined transmission means.

On the other hand, the voice signal of a speaker in the conference room B is supplied from a differential amplifier 30 in the conference room B to the capacitor loudspeaker 12 in the conference room A. The supplied voice signal is amplified by a voltage amplifier 31P and is applied to the front fixed electrode 50 of the flat loudspeaker (capacitor loudspeaker) 12 and the phase of the signal is inverted and the signal is amplified by a turnover voltage amplifier 31M and is applied to the rear fixed electrode 51 of the flat loudspeaker 12. A bias voltage is applied to the diaphragm 52 and the diaphragm 52 is vibrated by a suction force or a repulsion force responsive to the potential difference between the fixed electrodes 50 and 51, generating air vibration for producing a voice wave. When the diaphragm 52 is vibrated to the front side for forming a dense wave on the front side, a non-dense wave is formed on the rear side; whereas, when the diaphragm 52 is vibrated to the rear side for forming a non-dense wave on the front side, a dense wave is formed on the rear side. Thus, the voice wave output to the front side and the voice wave output to the rear side become opposite phases.

The loudspeaker voice of the positive phase output to the front side is rounded into the front microphone 11F and is collected and the loudspeaker voice of the opposite phase output to the rear side is rounded into the rear microphone 11R and is collected, but the loudspeaker voice is canceled by adding and combining.

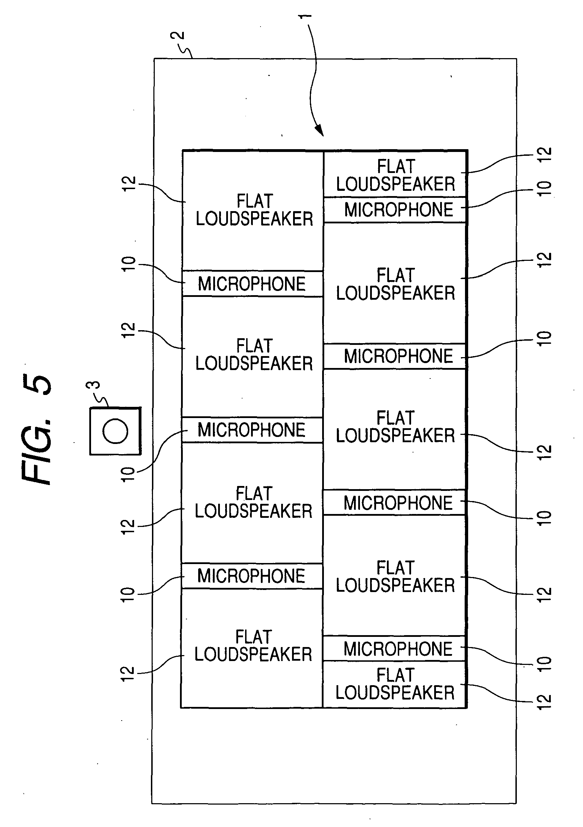

FIG. 5 is a drawing to show a panel sound apparatus for a videoconference system using a large number of flat loudspeakers and a large number of microphone units in combination. The panel sound apparatus also serves as a screen 2 of a projector television and is used together with a television camera 3 when a plurality of conference rooms distant from each other are connected for conducting a videoconference as shown in FIG. 6.

The panel sound apparatus 1 in FIG. 5 is made up of two stages of loudspeakers and microphones. At the upper stage, four roughly square flat loudspeakers 12 are arranged side by side and a longitudinally rectangular microphone unit 10 is placed between the flat loudspeakers 12. At the lower stage, three roughly square flat loudspeakers 12 are arranged side by side and further a flat loudspeaker 12 of almost a half breadth is arranged at both ends and a longitudinally rectangular microphone unit 10 is placed between the flat loudspeakers 12.

The panel sound apparatus 1 is used as the screen 2 (or a part of the screen 2) and video of the associated conference room is projected thereon, whereby voice (sound) is heard from the direction in which the video of the conference room is projected, presence is increased and in addition, the speaker may speak toward the microphone unit 10 in the direction (front microphone 11F), so that it is made possible to conduct a teleconference at a more natural attitude and in a more natural atmosphere than as the speaker speaks toward a discrete microphone.

The teleconference system (videoconference system) is not limited to the mode in which two panel sound apparatus 1 are connected in a one-to-one correspondence. Three or more panel sound apparatus 1 may be connected as star connection or as diagonal connection. The voice (audio) signal transmission system between the panel sound apparatus may be any. A plurality of transmission systems may be mixed as desired.

The microphone is not limited to the flat capacitor microphone. A usual dynamic microphone may be used. In this case, it may be housed in a tubular case, etc., for shutting off the lateral directivity.

As a configuration similar to that shown in FIG. 1C, the front loudspeaker 12F and the rear loudspeaker 12R are not limited to flat loudspeakers and may be usual cone loudspeakers. In this case, the voice signal input to the front loudspeaker and the voice signal input to the rear loudspeaker invert the phase of the voice wave formed with the terminal inverted. The cone loudspeaker is housed in a loudspeaker box; the loudspeaker box may be common to the front side and the rear side or may be separate. One front loudspeaker and one rear loudspeaker may be provided or a plurality of small loudspeakers may be arranged.

### Second Embodiment

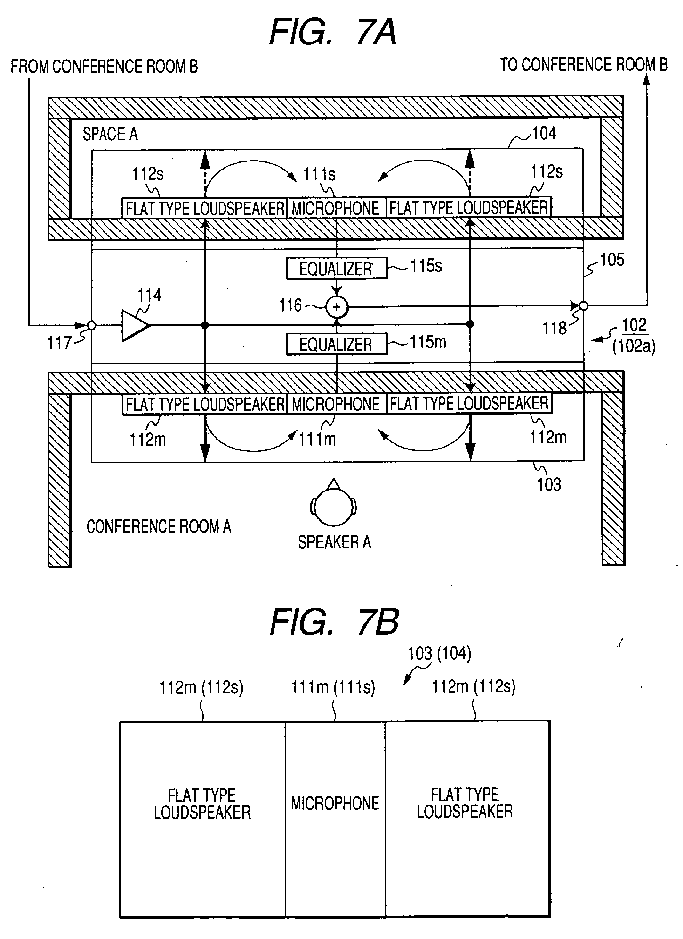

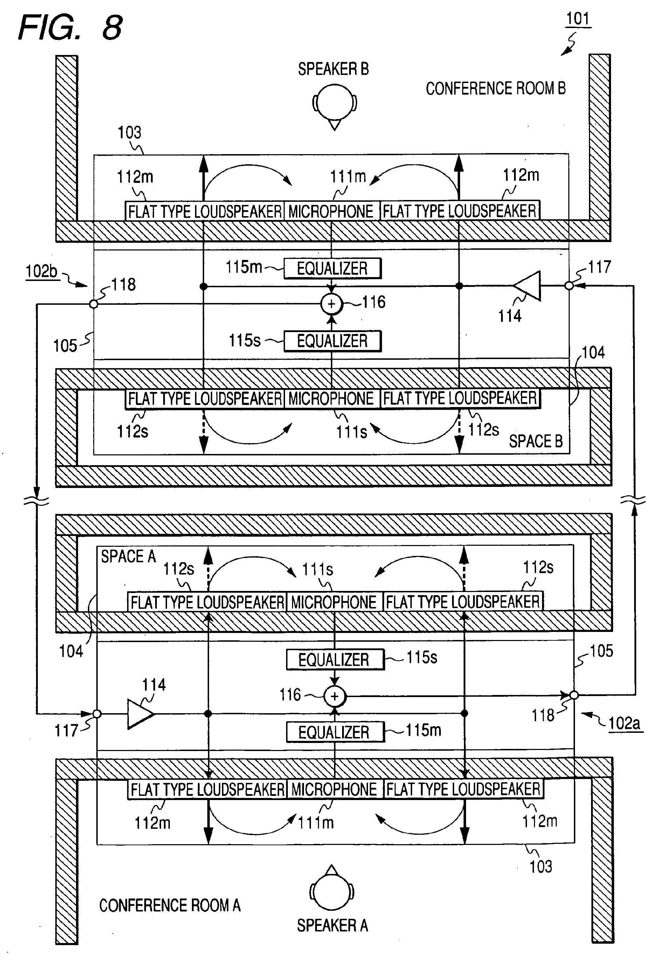

Figs. 7A and 7B are a block diagram which shows a schematic configuration of an acoustic apparatus according to a second embodiment of the invention. Fig. 8 is a block diagram which shows a schematic configuration of a remote conference system according to the second embodiment of the invention.

A remote conference system 101 is such a system that at least two units of panel sound apparatuses 102 are connected each other. In the following explanation, as shown in Figs. 7A through 8, a minimum configuration example of the remote conference system 101 in which the panel sound apparatuses 102 are installed in conference rooms A, B, respectively will be described.

As shown in Fig. 7A, the panel sound apparatus 102 includes a main unit 103, a sub unit 104, and a signal adjustment circuit 105. The main unit 103 is installed in a conference room (conference rooms A, B in Fig. 8) which is a space where a speaker (attendant of a conference) is present. The sub unit 104 is installed in an empty space (spaces A, B in Fig.8) which is a space separated from the main unit 103, and in which a sound wave from an outside such as a conference room where the main unit 103 is installed and another room is not almost propagated and there is no speaker.

The main unit 103 is of such a configuration that it is equipped with one or a plurality of microphones and loudspeakers, respectively. As one example, as shown in Fig. 7B, it shows such a configuration that two flat type loudspeakers 112m are bonded on both sides of a flat type capacitor microphone 111m. In addition, the sub unit 104 is of a similar configuration to that of the main unit 103, and is of such a configuration that flat type loudspeakers 112s are bonded on both sides of a flat type capacitor microphone 111s.

It is desirable that the flat type capacitor microphone 111m is configured in such a manner that its front surface is located on the same plane as a front surface of the flat type loudspeaker 112m. In addition, it is desirable that the main unit 103 and the sub unit 104 are configured as for example, a wall-mounted type apparatus such as a white board.

The signal adjustment circuit 105 is equipped with a voltage amplifier 114, an equalizer 115m, an equalizer 115s, an adding circuit 116, an input terminal 117, and an output terminal 118.

Connection of each section of the panel sound apparatus 102 is as follows. The input terminal 117 is connected to an input side of the voltage amplifier 114. An output terminal of the voltage amplifier 114 is connected to two flat type loudspeakers 112m of the main unit 103 and two flat type loudspeakers 112s of the sub unit 104. The capacitor microphone 111m (hereinafter, referred to as microphone 111m.) is connected to an input side of the equalizer 115m, and an output side of the equalizer 115m is connected to an input side of the adding circuit 116. An output side of the capacitor microphone 111s (hereinafter, referred to as microphone 111s.) is connected to an input side of the equalizer 115s, and an output side of the equalizer 115s is connected to an input side of the adding circuit 116. An output side of the adding circuit 116 is connected to the output terminal 118.

The microphone 111m collects voice which is made by a speaker A which is present in the conference A wherein the main unit 103 is installed. Meanwhile, the microphone 111m.also collects round sound of voice which is reproduced from the flat type loudspeaker 112m, on the occasion of collecting voice which is made by the speaker A.

The microphone 111 s is an element for collecting round sound of voice which is reproduced from the flat type loudspeaker 112s.

The flat type loudspeaker 112m converts voice sound signals which were sent from another panel sound apparatus 102 which was installed in another conference room, and reproduces voice which was made by a speaker who is present in the another conference room.

The flat type loudspeaker 112s converts voice sound signals sent from another panel sound apparatus 102 installed in another conference room B into opposite phase, and reproduces voice voiced by a speaker who is present in the another conference room. In addition, the flat type loudspeaker 112s generates round sound to the microphone 111s.

The voltage amplifier 114 amplifies voice sound signal output from another panel sound apparatus 102, and outputs to two flat type loudspeakers 112m and two flat type loudspeakers 112s.

The equalizer 115m improves sound quality of voice sound signals of the speaker A, which are collected by the microphone 111m.

The equalizer 115s corrects a wave form, a frequency characteristic, sound volume etc. of round sound of the flat type loudspeaker 112s which is collected by the microphone 111s, in such a manner that a signal of round sound of the flat type loudspeaker 112s which is collected by the microphone 111s and a signal of round sound of the flat type loudspeaker 112m which is collected by the microphone 111m are negated when they are added by the adding circuit 116.

The adding circuit 116 adds a voice sound signal output from the microphone 111s and corrected by the equalizer 115s, and a voice sound signal output from the microphone 111 m and corrected by the equalizer 115m, to output it to the output terminal 118.

As shown in Fig. 8, in case of configuring the remote conference system 101 by use of two units of the panel sound apparatuses 102, the input terminal 117 of the panel sound apparatus 102 installed in the conference room A side (hereinafter, also referred to as panel sound apparatus 102a.) and the output terminal 118 of the panel sound apparatus 102 installed in the conference room B side (hereinafter, also referred to panel sound apparatus 102b.) are connected, and the output terminal 118 of the panel sound apparatus 102 installed in the conference room A side, and the input terminal 117 of the panel sound apparatus 102 installed in the conference room B side are connected. Meanwhile, connection between the both panel sound apparatuses 102a, 102b is not limited if transmission/reception of a signal can be carried out, such as an audio cable, a local area network, a telephone line, Internet, electromagnetic wave communication, and infrared ray communication.

Next, the panel sound apparatus 102, which configures the remote conference system 101 according to the embodiment of the invention, is equipped with the sub unit 104 as described above, and a voice sound signal collected by the main unit and a voice sound signal collected by the sub unit 104 are added by the signal adjustment circuit 105, and thereby, it is possible to cancel round sound which is generated in the main unit 103, and outputs only a signal of voice voiced by the speaker A to another panel sound apparatus 102.

That is, the main unit 103 of the panel sound apparatus 102a installed in the conference room. A converts voice sound signals sent from the panel sound apparatus 102b installed in the conference room B into sound waves and reproduces them from the flat type loudspeaker 112m. At this time, the microphone 111m collects round sound from the flat type loudspeaker 112m and voice voiced by the speaker A, and outputs picked-up voice sound signals, to the adding circuit 116 through the equalizer 115m.

On one hand, the sub unit 104 of the panel sound apparatus 102a converts voice sound signals sent from the panel sound apparatus 102b into voice sound signals in opposite phase, and reproduces them through the flat type loudspeaker 112s. Then, the microphone 111s collects round sound of this voice sound signal in opposite phase, and outputs the picked-up voice sound signals, to the adding circuit 116 through the equalizer 115s. At this time, the equalizer 115s corrects a wave form, a frequency characteristic, sound volume etc. of round sound of the flat type loudspeaker 112s which is collected by the microphone 111s, in such a manner that a signal of round sound of the flat type loudspeaker 112s which was collected by the microphone 111s and a signal of round sound of the flat type loudspeaker 112m which was collected by the microphone 11 m are negated when they are added by the adding circuit 116. Therefore, the adding circuit 116 outputs only a voice sound signal voiced by the speaker A, to the panel sound apparatus 102b of the conference room B, since the round sounds are canceled at the time that a voice sound signal output from the microphone 111s and corrected by the equalizer 115s, and a voice sound signal output from the microphone 111 m and corrected by the equalizer 115m are added.

Meanwhile, in Fig. 8, a sound wave reproduced by the flat type loudspeaker 112m is represented by a solid line, and a sound wave in opposite phase reproduced by the flat type loudspeaker 112s is represented by a dotted line.

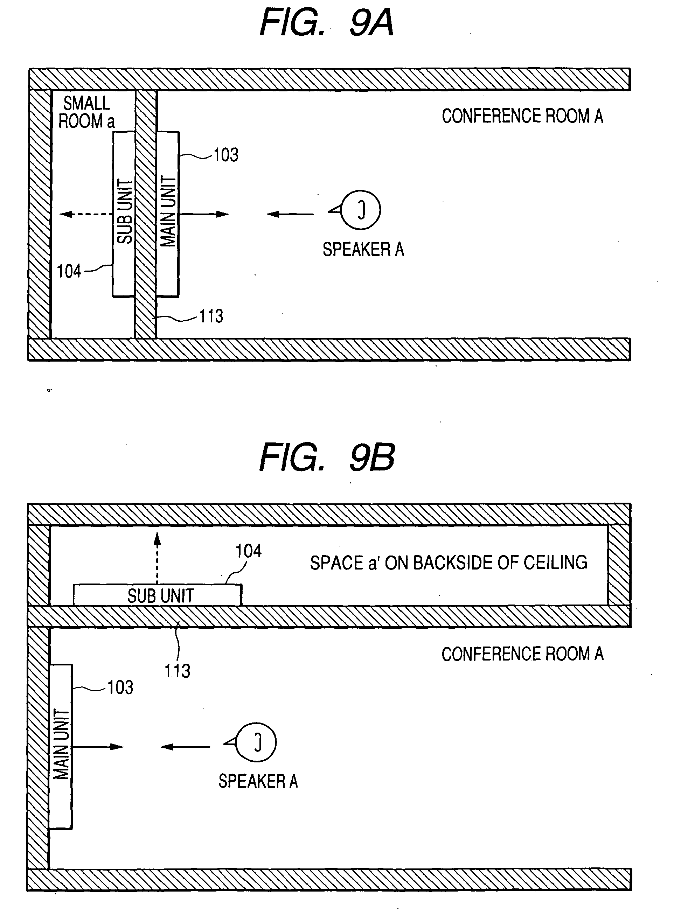

Figs. 9A and 9B are conceptual diagrams which show an installation example of a panel sound apparatus. It is desirable that the sub unit 104 of the panel sound apparatus 102 is installed in a space with an isolated configuration in such a manner that a sound wave from the conference room A is not propagated and voice of another speaker etc. can not be collected. For example, as shown in Fig. 9A, it is preferable that a small room a is provided on a back surface of a wall to which the main unit 103 of the panel sound apparatus 102 is attached, and the sub unit 104 is disposed on a wall surface of this small room a.

In addition, as shown in Fig. 9B, the sub unit 104 may be disposed in a space a' on a backside of a ceiling of the conference room A.

Further, in the case that there are a plurality of conference rooms other than the conference room A, and the other conference rooms includes a conference room C which is not used at all during a period of a conference by use of the conference room A, it is also possible to configure the panel sound apparatus 102 by connecting the main unit 103 disposed in the conference room C and the main unit 103 disposed in the conference room A, to the signal adjustment circuit 105. In this regard, however, in this case, there is such a necessity that a switch for switching polarity of the loudspeaker 112m of the conference room C is provided, and by changing over this switch, the main unit 103 of the conference room C is used as the sub unit 104.

In case that the sub unit 104 is disposed in the small room a and the space a' on the backside of the ceiling as described above, the same ones as the microphone 111 m and the flat type loudspeaker 112m are preferably used as the microphone 111 s and the flat type loudspeaker 112s. When the sub unit 104 is disposed in a narrower space than the conference room A such as the small room a and the space a' on the backside of the ceiling, acoustic characteristics of installation spaces differ, and therefore, a characteristic of round sound becomes one which is different from that of round sound in the main unit 104. However, in the main unit 103 and the sub unit 104, characteristics of microphones and loudspeakers are the same, and therefore, it is possible to easily carry out adjustment (correction) of the equalizer 115s, also on the occasion that test data is collected in advance and each parameter for wave form/frequency characteristic/sound volume etc. is set up.

As described above, in case that the room in which the main unit 103 is installed and the room (space) in which the sub unit 104 is installed are adjacent, it is preferable that a sound insulating wall 113 is disposed on a boundary and at a periphery of both spaces as shown in Figs. 9A and 9B. By this means, a propagation of sound waves from a space and another room where the main unit 103 is installed to be propagated, to a space where the sub unit 104 is installed, is suppressed and therefore, it is possible to prevent unnecessary sound other than round sound of voice sound which is reproduced from the sub unit 104 from being collected by the microphone 111 s of the sub unit 104.

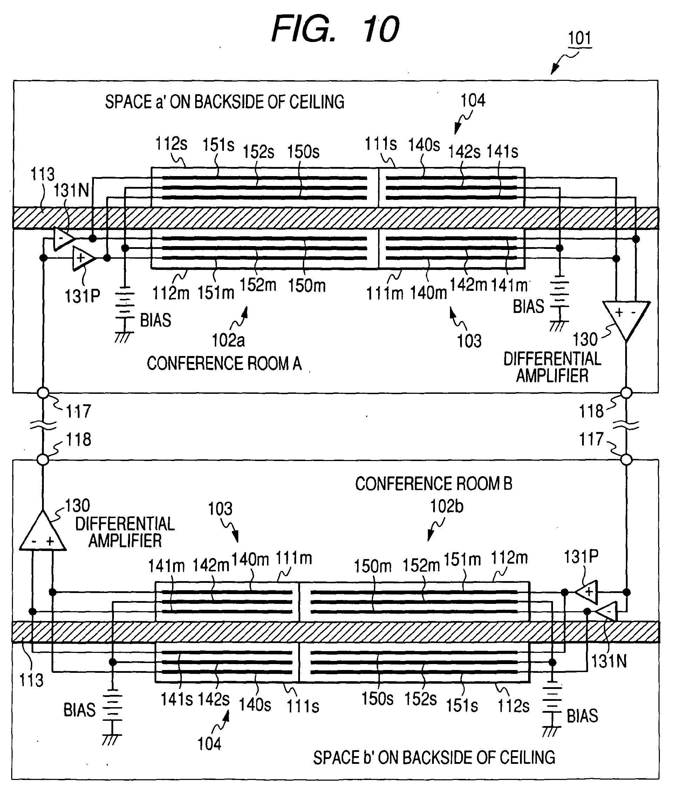

Fig. 10 is a view which shows an example of electric connection in a remote conference system using two units of panel sound apparatuses. In this figure, for the purpose of simplifying an explanation, graphic representation of the equalizers 115m, 115s shown in Figs. 7A through 8 is omitted, and only one of the flat type loudspeakers 12m, 12s is shown in the figure.

A remote conference system 101 shown in Fig. 10 is almost the same as the configuration shown in Fig. 8, and one panel sound apparatus 102a is installed in the conference room A and the back side a' of its ceiling (space A), and the other panel sound apparatus 102b is installed in the conference room B and a back side b' of its ceiling (space B). Hereinafter, the panel sound apparatus 102a will be mainly described.

In Fig. 10, a microphone 111m and a microphone 111s are flat type capacitor microphones, and are of the same configuration. The microphone 111m (111s) is such an element that a diaphragm 142m(142s), which is composed of an electric conductive thin film without air permeability, is disposed between mesh-shaped two layer fixed electrodes 140m(140s), 141 m(141 s), and a bias voltage is applied to the diaphragm 142m(142s). The diaphragm 142m(142s) and the fixed electrodes 140m(140s), 141m(141s) are electrostatic- coupled, and on the fixed electrodes 140m(140s), 141 m(141 s), electrostatic capacitance, which corresponds to a distance to the diaphragm 142m(142s), is generated by a bias voltage which is applied to the diaphragm 142m(142s). When a sound wave is propagated from an outside, the diaphragm 142m(142s) is vibrated by that sound wave, and by this vibration, distances between the diaphragm 142m(142s) and the fixed electrodes 140m(140s), 141m(141s) are changed, and therefore, a minute electric current is generated by such a matter that electrostatic capacitance generated between the diaphragm 142m(142s) and the fixed electrodes 140m(140s), 141m(141s) is changed, and a signal voltage obtained by such a matter that this minute electric current flows through a resister device with a high resistance value is amplified by a differential amplifier 130, and thereby, it is possible to take out the propagated sound wave as a voice sound signal.

Flat type loudspeakers 112m, 112s are flat type capacitor loudspeakers, and are of the same configuration. The flat type loudspeaker 112m(112s) is formed so that a diaphragm 152m(152s), which is composed of an electric conductive thin film without air permeability, is disposed between mesh-shaped two layer fixed electrodes (positive electrode, negative electrode) 150m(150s), 151m(151s), and a bias voltage is applied to the diaphragm, and an audio signal voltage is applied to the fixed electrodes, and thereby, the diaphragm 152m(152s) is vibrated and an audio signal (voice sound signal) is output (reproduced) as a sound wave. In addition, as to the flat type loudspeaker 112m, a flat front surface of the diaphragm 152m is opened through the mesh fixed electrode 151m, and as to the flat type loudspeaker 112s, a flat front surface of the diaphragm 152s is opened through the mesh fixed electrode 151s.

The flat type loudspeakers 112m, 112s are elements which form sound waves by vibration of the flat shaped diaphragm 152m(152s), and therefore, a sound wave to be formed becomes a plane wave, and has a directivity in a front surface direction. Therefore, it is possible to minimize round of sound into the microphones 111m, 111s disposed immediately lateral to the flat type loudspeaker 112m, 112s.

That is, the microphone 111 m and the flat type loudspeaker 112m are allocated in an immediately lateral physical relation in which the diaphragm is on the same plane, and therefore, the microphone 111m is to be allocated at such a position that a directivity of a sound wave, which is generated by the flat type loudspeaker 112m, is the weakest. Therefore, a sound wave, which is reproduced by the flat type loudspeaker 112m is rounded into the microphone 111 m, but round of sound into the microphone 111 m is minimized.

A common bias voltage is applied to the diaphragm 142m of the microphone 111 m and the diaphragm 142s of the microphone 111s, and the fixed electrodes 140m, 140s are connected to a non-inversion input terminal of a differential amplifier 130 mutually. In addition, the fixed electrodes 141m, 141s are connected to an inversion input terminal of the differential amplifier 130 mutually. The fixed electrodes 140m, 140s and the fixed electrodes 141 m, 142s are standardized and connected to a terminal of the differential amplifier 130, and thereby, signals of the both microphones 111m, 111s of the main unit 103 and the sub unit 104 are combined in an adding manner, and loudspeaker sound rounded from the flat type loudspeakers 112m, 112s is canceled. Then, from the differential amplifier 130, only a voice sound signal of a speaker, which is collected by the microphone 111m, is output. This voice sound signal is supplied to the flat type loudspeakers 112m, 112s in the conference room B, through signal transmission means such as a cable.

On one hand, a voice sound signal of a speaker in the conference room B is supplied from the differential amplifier 130 in the conference room B to the flat type loudspeaker 112m in the conference room A and the flat type loudspeaker 112s in the back side a' of a ceiling. The supplied voice sound signal is amplified by a voltage amplifier 131 P, and then, applied to the fixed electrode 151 m of the flat type loudspeaker 112m and the fixed electrode 150s of the flat type loudspeaker 112s, and positive and negative of its phase are inverted and amplified by an inversion voltage amplifier 131N, and then, applied to the fixed electrode 150m of the flat type loudspeaker 112m and the fixed electrode 151s of the flat type loudspeaker 112s. A common bias voltage is applied to the diaphragms 152m, 152s, and the diaphragm 52m is vibrated by sucking force/repulsive force which correspond to an electric potential difference to the fixed electrodes 150s, 151s, and generates air vibration which becomes a sound wave.

When the diaphragm 152m is vibrated to a front surface side and waves, which are thick to the front surface side, are formed, the diaphragm 152s is vibrated to a rear surface side and waves, which are thin to the front surface side, are formed. Adversely, when the diaphragm 152m is vibrated to the rear surface side and waves, which are thin to the front surface side, are formed, the diaphragm 152s is vibrated to the front surface side and thick waves are formed. On that account, a sound wave, which is reproduced by the flat type loudspeaker 112s, becomes one in opposite phase to a sound wave which is reproduced by the flat type loudspeaker 112m.

Loudspeaker sound in normal phase, which was reproduced from the flat type loudspeaker 112m, is rounded into the microphone 111m and collected by the same. In addition, loudspeaker sound in opposite phase, which was reproduced from the flat type loudspeaker 112s, is rounded into the microphone 111s and collected by the same. Then, by combining, in an adding manner, the both loudspeaker sounds, this round sound is canceled.

### Third Embodiment

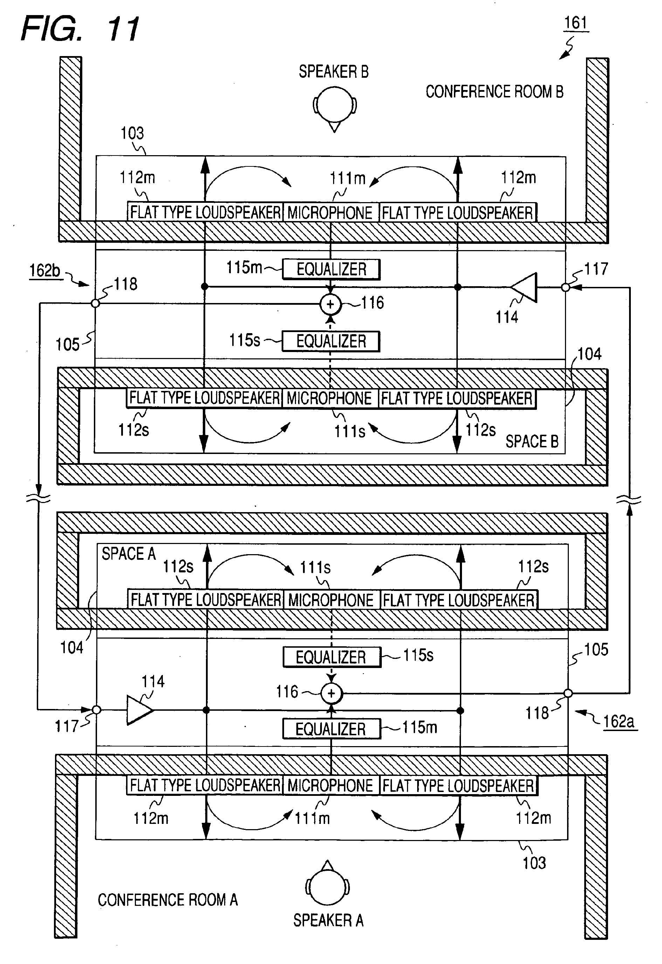

Fig. 11 is a block diagram which shows a schematic configuration of a remote conference system according to a third embodiment of the invention. A panel sound apparatus 162 (162a, 162b), which configures a remote conference system 61 according to the third embodiment, reproduces voice sound sent from another panel sound apparatus 162 from the flat type loudspeaker 112m of the main unit 103 and the flat type loudspeaker 112s of the sub unit 104, in the same phase, and collects it by the microphones 111m, 111 s. In addition, a signal of a sound wave collected by the microphone 11 m is output as it is, and a sound wave collected by the microphone 111s is inverted in its phase, and then, a signal is output. On that account, when output signals of the microphones 111m, 111s are combined in an adding manner by the signal adjustment circuit 105, it is possible to cancel round sound which is rounded into the microphone 111 m in the time that voice sound sent from another panel sound apparatus 162 is reproduced by the flat type loudspeaker 112m. Meanwhile, in Fig. 11, a voice sound signal, which is output by the microphone 11 m, is represented by a solid line, and a voice sound signal in opposite phase, which is output by the microphone 111s, is represented by a dotted line.

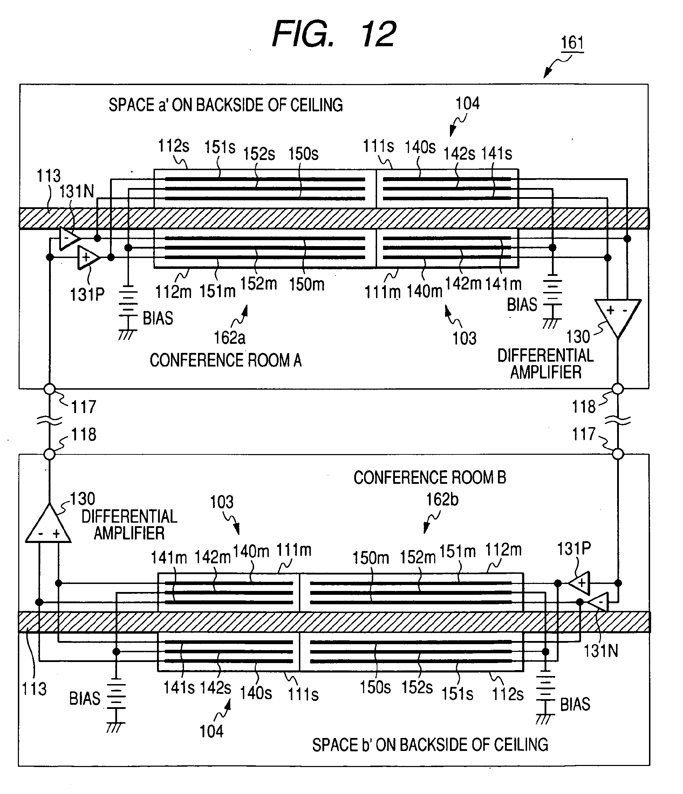

Fig. 12 is a view which shows electric connection in a remote conference system configured by use of two units of panel sound apparatuses according to the third embodiment. As to the panel sound apparatus 162, its configuration and wiring connection are the same as those of the panel sound apparatus 102 except for a part of wiring connection. On that account, as to each section of the panel sound apparatus 162, the same reference numerals and signs as those of the panel sound apparatus 102 are used, and an explanation of each section will be omitted. In addition, in Fig. 12, for the purpose of simplifying an explanation, graphic representation of the equalizers 115m, 115s shown in Fig. 111 is omitted, and only one of the flat type loudspeakers 112m, 112s is shown in the figure.

As to one panel sound apparatus 162a, a main unit 103 is installed in a conference room A, and a sub unit 104 is installed in a backside a' of a ceiling (space A). In addition, as to the panel sound apparatus 162b, a main unit 103 is installed in a conference room B, and a sub unit 104 is installed in a back side b' of a ceiling (space B). Hereinafter, the panel sound apparatus 162a will be mainly described.

A common bias voltage is applied to diaphragms 142m, 142s of microphones 111m, 111s, and fixed electrodes 140m, 40s are connected to a non-inversion input terminal of a differential amplifier 130 mutually. In addition, fixed electrodes 141m, 141s are connected to an inversion input terminal of the differential amplifier 130. The fixed electrodes 140m, 140s and the fixed electrodes 141m, 142s are combined and connected to a terminal of the differential amplifier 130, and thereby, a signal of a sound wave collected by the microphone 111m and a signal of a sound wave in opposite phase to a sound wave collected by the microphone 111s are added each other and combined, and loudspeaker sound rounded from the flat type loudspeaker 112m is canceled. Then, from the differential amplifier 130, only a voice sound signal of a speaker, which is collected by the microphone 111 m, is output. This voice sound signal is supplied to the flat type loudspeakers 112m, 112s in the conference room B, through signal transmission means such as a cable.

On one hand, a voice sound signal of a speaker in the conference room B is supplied from the differential amplifier 130 in the conference room B to the flat type loudspeaker 112m in the conference room A and the flat type loudspeaker 112s in the back side a' of a ceiling. The supplied voice sound signal is amplified by a voltage amplifier 131 P, and then, applied to the fixed electrode 151 m on a front surface side of the flat type loudspeaker 112m and the fixed electrode 151 s on a front surface side of the flat type loudspeaker 112s, and positive and negative of its phase are inverted and amplified by an inversion voltage amplifier 131 N, and then, applied to the fixed electrode 150m on a rear surface side of the flat type loudspeaker 112m and the fixed electrode 150s on a rear surface side of the flat type loudspeaker 112s. A common bias voltage is applied to the diaphragm 152m(152s), and it is vibrated by sucking force/repulsive force which correspond to an electric potential difference to the fixed electrodes 150m(150s), 151m(151s), and generates air vibration which becomes a sound wave. When the diaphragm 152m is vibrated to a front surface side and waves which are thick to the front surface side are formed, the diaphragm 152s is also vibrated to a front surface side and waves which are thick to the front surface side are formed. On the other hand, when the diaphragm 152m is vibrated to a rear surface side and waves which are thin to the front surface side are formed, the diaphragm 152s is also vibrated to the rear surface side and waves which are thin to the front surface side, are formed. Therefore, a sound wave reproduced by the flat type loudspeaker 112s becomes one in the same phase as a sound wave which is reproduced by the flat type loudspeaker 112m.

Loudspeaker sound in normal phase, which was reproduced from the flat type loudspeaker 112m, is rounded into the microphone 111m and collected by the same, and loudspeaker sound in normal phase, which was reproduced from the flat type loudspeaker 112s, is rounded into the microphone 111s and collected by the same. Then, by combining a voice sound signal in normal phase output from the microphone 111m, and a voice sound signal in opposite phase output from the microphone 111s in the differential amplifier 130, round sound is canceled.

### Fourth Embodiment

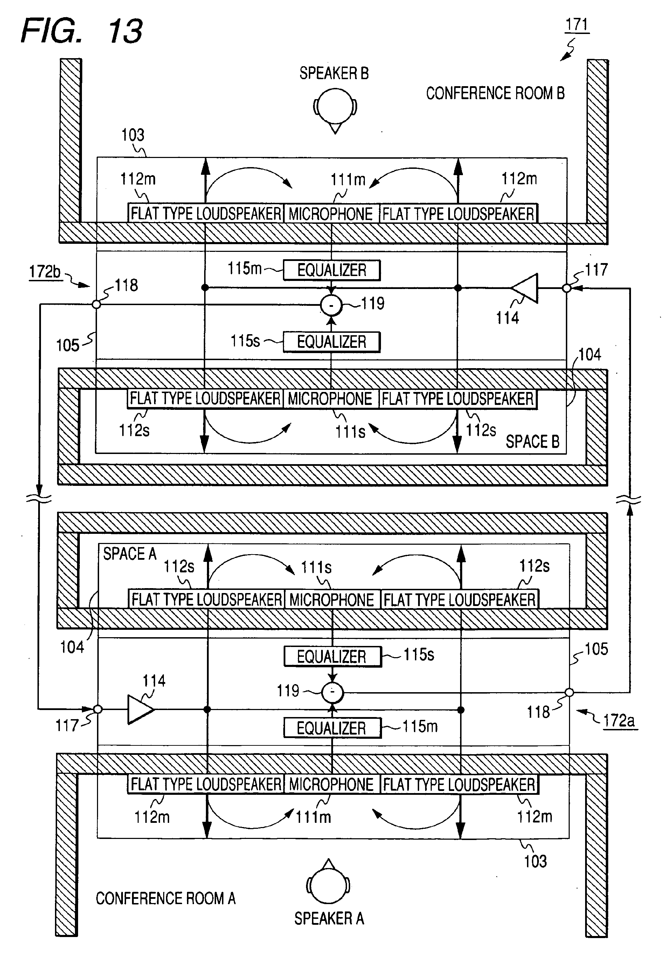

Fig. 13 is a block diagram which shows a schematic configuration of a remote conference system according to a fourth embodiment of the invention. A panel sound apparatus 172 (172a, 172b), which configures a remote conference system 171 according to the fourth embodiment, reproduces voice sound was sent from another panel sound apparatus 172 from the flat type loudspeaker 112m of the main unit 103 and the flat type loudspeaker 112s of the sub unit 104, in the same phase, and collects it by the microphones 111m, 111s. In addition, a signal of a sound wave collected by.the microphone 111m, and a sound wave collected by the microphone 111s, are output without change, and output signals of the microphones 111 m, 111 s are combined in a subtracting manner by the signal adjustment circuit 105. Accordingly, it is possible to cancel round sound rounded into the microphone 11 m at the time that voice sound sent from another panel sound apparatus 172 is reproduced by the flat type loudspeaker 112m.

Meanwhile, in the remote conference system 171 shown in Fig. 13, a configuration excepting a subtracting circuit 119 which combines output signals of the microphones 111m, 111s in a subtracting manner is the same as that of the remote conference system 101 shown in Fig. 8.

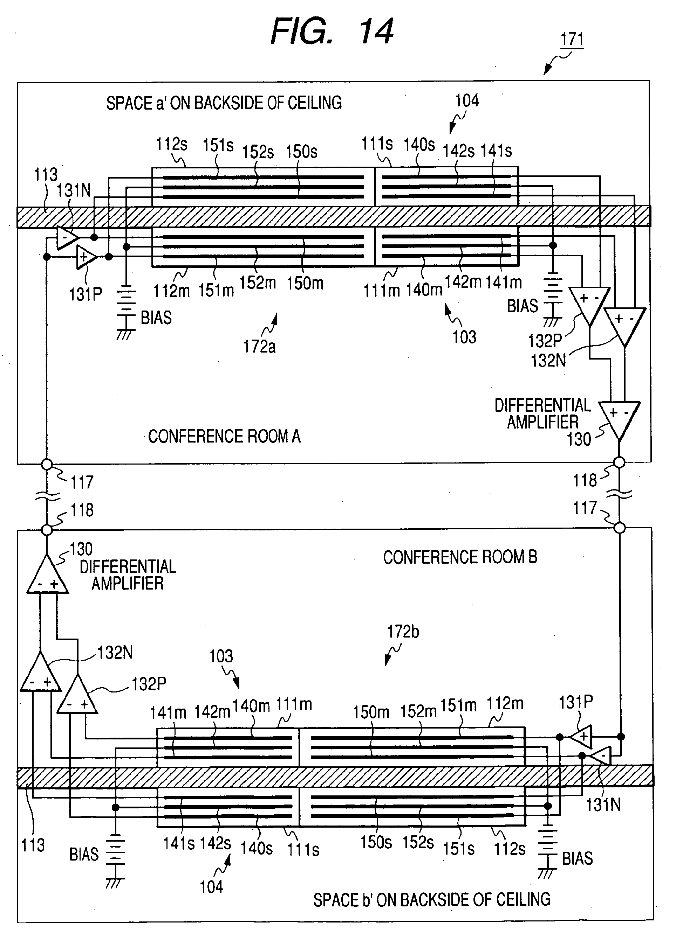

Fig. 14 is a view which shows electric connection in a remote conference system which was configured by use of two units of panel sound apparatuses. Here, as to the panel sound apparatus 172, which configures the remote conference system 171, a circuit configuration and wiring connection are the same as those of the panel sound apparatus 102 except for a part of a circuit configuration and wiring connection. On that account, as to each section of the panel sound apparatus 172, the same reference numerals and signs as those of the panel sound apparatus 102 are used, and an explanation of each section will be omitted. In addition, in Fig. 14, for the purpose of simplifying an explanation, graphic representation of the equalizers 115m, 115s shown in Fig.13 is omitted, and only one of the flat type loudspeakers 112m, 112s is shown in the figure.

As to one panel sound apparatus 172a, a main unit 103 is installed in a conference room A, and a sub unit 104 is installed in a back side a' of a ceiling (space A). In addition, as to the panel sound apparatus 172b, a main unit 103 is installed in a conference room B, and a sub unit 104 is installed in a back side b' of a ceiling (space B). Hereinafter, the panel sound apparatus 172a will be mainly described.

A common bias voltage is applied to diaphragms 142m, 142s of microphones 111m, 111s, and a fixed electrodes 140m is connected to a non-inversion input terminal of a differential amplifier 132P, and a fixed electrode 140s is connected to an inversion input terminal of the differential amplifier 132P. In addition, a fixed electrode 141m is connected to a non-inversion input terminal of a differential amplifier 132N, and a fixed electrode 141s is connected to an inversion input terminal of the differential amplifier 132N. Further, an output terminal of the differential amplifier 132P is connected to a non-inversion input terminal of the differential amplifier 130, and an output terminal of the differential amplifier 132N is connected to an inversion input terminal of the differential amplifier 130.

By carrying out connections in this manner, a signal of a sound wave collected by the microphone 111m, and a signal of a sound wave collected by the microphone 111s, are combined in a subtracting manner, and loudspeaker sound (round sound) rounded from the flat type loudspeaker 112m is canceled. Then, from the differential amplifier 130, only a voice sound signal of a speaker, which is collected by the microphone 11 m, is output. This voice sound signal is supplied to the flat type loudspeakers 112m, 112s in the conference room B through signal transmission means such as a cable.

On one hand, a voice sound signal of a speaker in the conference room B is supplied from the differential amplifier 130 in the conference room B to the flat type loudspeaker 112m in the conference room A and the flat type loudspeaker 112s in the back side a' of a ceiling. The supplied voice sound signal is amplified by a voltage amplifier 131 P, and then, applied to the fixed electrode 151 m on a front surface side of the flat type loudspeaker 112m and the fixed electrode 151s on a front surface side of the flat type loudspeaker 112s. Positive and negative of its phase are inverted and amplified by an inversion voltage amplifier 131 N, and then, applied to the fixed electrode 150m on a rear surface side of the flat type loudspeaker 112m and the fixed electrode 150s on a rear surface side of the flat.type loudspeaker 112s. A common bias voltage is applied to the diaphragm 152m(152s), and it is vibrated by sucking force/repulsive force which correspond to an electric potential difference to the fixed electrodes 150m(150s), 151m(151s), and generates air vibration which becomes a sound wave. When the diaphragm 152m is vibrated to a front surface side and waves, which are thick to the front surface side, are formed, the diaphragm 152s is also vibrated to a front surface side and waves which are thick to the front surface side are formed, On the other hand, when the diaphragm 152m is vibrated to a rear surface side and waves which are thin to the front surface side are formed, the diaphragm 152s is also vibrated to the rear surface side and waves which are thin to the front surface side are formed. On that account, a sound wave reproduced by the flat type loudspeaker 12s becomes one in the same phase as a sound wave which is reproduced by the flat type loudspeaker 112m.

Loudspeaker sound in normal phase, which was reproduced from the flat type loudspeaker 112m, is rounded into the microphone 111m and collected by the same, and loudspeaker sound in normal phase, which is reproduced from the flat type loudspeaker 112s, is rounded into the microphone 111s and collected by the same. Then, by combining, in a subtracting manner, a voice sound signal in normal phase which was output from the microphone 111 m, and a voice sound signal in normal phase which is output from the microphone 111s in the differential amplifiers 130, 132P and 132N, round sound is canceled.

Meanwhile, the remote conference systems 101, 161, 171 according to the embodiments of the invention are not limited to such a mode that two units of the panel sound apparatuses 102, 162, 172 are connected in a one-to-one manner. It is all right even if it is configured in such a manner that three units or more of the panel sound apparatuses 102, 162, 172 are connected in a star type or a diagonal line type, and it is possible to arbitrarily select a transmission method of a voice sound signal between respective panel sound apparatuses. In addition, it is also possible to have a plurality of transmission methods existed in a mixed manner. Further, each panel sound apparatus 102, 162, 172 outputs only a signal of voice sound collected by the microphone 111m of the main unit 103 and made by a speaker, without outputting round sound respectively, and therefore, it is possible to configure a remote conference system by combining respective panel sound apparatuses 102, 162, 172.

In addition, microphones, which are used for the main unit and the sub unit of the panel sound apparatus 102, are not limited to flat type capacitor microphones, and it is also possible to use a dynamic type microphone. In this case, it is all right if a directivity in a lateral direction is cut off, by storing the dynamic microphone in a cylindrical case etc.

Further, the flat type loudspeaker 112m and the flat type loudspeaker 12s are not limited to capacitor loudspeakers, and it is also possible to use a cone type loudspeaker. In this case, as to a voice sound signal which is input to the flat type loudspeaker 112m and a voice sound signal which is input to the flat type loudspeaker 112s, a phase of a sound wave formed is inverted by inverting terminals. By this means, it is possible to heighten flexibility of design of the panel sound apparatus.

In addition, as described above, in an acoustic apparatus of the invention, it is possible to cancel round sound, and therefore, if a positional relation of the microphone 111 m and the loudspeaker 12m of the main unit 103 is the same as a positional relation of the microphone 111s and the loudspeaker 112s of the sub unit 104, it is possible to freely change a positional relation of a microphone and a loudspeaker.

### Fifth Embodiment

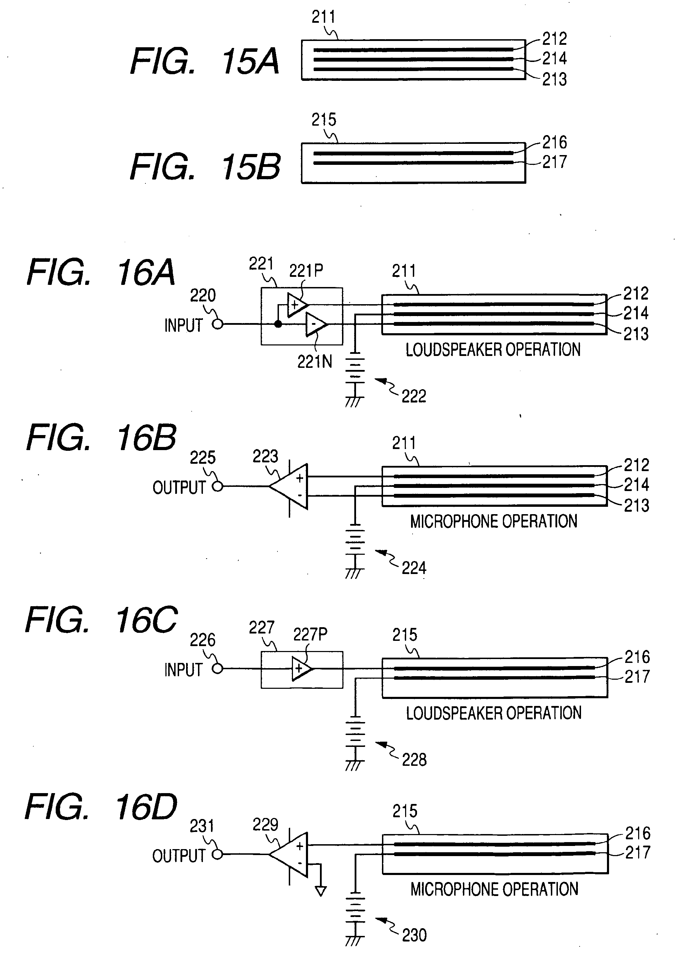

Hereinafter, details of the invention will be described. Figs. 15A and 15B are cross sectional views which show a schematic configuration of a capacitor type device which configure an acoustic device according to a fifth embodiment of the invention.. As shown in Fig. 15A, a flat capacitor type device 211 includes a flat plate shaped diaphragm 214, which is composed of an electric conductive thin film without air permeability, is allocated between mesh-processed flat plate shaped two layer fixed electrodes (a positive electrode, a negative electrode) 212, 213, in opposition to the fixed electrodes 212, 213. In addition, in the acoustic device according to the embodiment of the invention, as shown in Fig. 15B, it is also possible to use a flat capacitor type device 215 in which a flat plate shaped diaphragm 217, which is composed of an electric conductive thin film without air permeability, is opposed to a mesh-processed flat plate shaped one layer fixed electrode (positive electrode) 216.

Figs. 16A through 16D are block diagrams which show a schematic configuration of such a case that a capacitor type device is used as a loudspeaker, and such a case that it is used as a microphone. As shown in Fig. 16A, in case that the flat capacitor type device 211 is operated and used as a loudspeaker, an amplifier (power amplifier) 221, and a bias power supply 222 are connected to the flat capacitor type device 211. That is, an audio signal input from an input terminal 220 is amplified in a non-inversion voltage amplifier 221 P, and a voltage, which corresponds to this signal, is applied to the fixed electrode 212 on a front surface side of the flat capacitor type device 211, and positive and negative of a phase is inverted and amplified by a non-inversion voltage amplifier 221 N, and a voltage, which corresponds to this signal, is applied to the fixed electrode 213 on a rear surface side of the flat capacitor type device 211. A bias voltage is applied to the diaphragm 214 from the bias power supply 222, and it is vibrated by sucking force/repulsive force generated depending on an electric potential difference between the fixed electrodes 212, 213, to generate air vibration which becomes sound waves.

As shown in Fig. 16B, in case that the flat capacitor type device 211 is operated and used as a microphone, a differential amplifier 223, and a bias power supply 224 are connected to the flat capacitor type device 211. That is, the fixed electrode 212 is connected to a non-inversion input terminal of the differential amplifier 223. In addition, the fixed electrode 213 is connected to an inversion input terminal of the differential amplifier 223. Further, a bias voltage is applied to the diaphragm 214 from the bias power supply 224. The diaphragm 214 and the fixed electrodes 212, 213 are electrostatic-coupled, and electrostatic capacitance corresponding to a distance to the diaphragm 214 is generated on the fixed electrodes 212, 213, by the bias voltage which is applied to the diaphragm 214. When sound waves are propagated from an outside, the diaphragm 214 is vibrated by its sound waves, and by this vibration, distances between the diaphragm 214 and the fixed electrodes 212, 213 are changed. Therefore, a minute electric current is generated by such a matter that electrostatic capacitance generated on the fixed electrodes 212, 213 is changed, and a signal voltage obtained by such a matter that this minute electric current flows through a resistance device with a high resistance value is amplified by the differential amplifier 223, and thereby, it is possible to take out propagated sound waves as a sound signal from an output terminal 225.

As shown in Fig. 16C, in case that the flat capacitor type device 215 is operated and used as a loudspeaker, an amplifier (power amplifier) 227 and a bias power supply 228 are connected to the flat capacitor type device 215. That is, an audio signal input from an input terminal 226 is amplified in a non-inversion voltage amplifier 227P, and a voltage corresponding to this signal is applied to the fixed electrode 216 on a front surface side of the flat capacitor type device 215. A bias voltage is applied to the diaphragm 217 from the bias power supply 228, and the diaphragm is vibrated by sucking force/repulsive force generated depending on an electric potential difference between it and the fixed electrode 216, to generate air vibration which becomes sound waves.

As shown in Fig. 16D, in case that the flat capacitor type device 215 is operated and used as a microphone, a differential amplifier 229, and a bias power supply 230 are connected to the flat capacitor type device 215. That is the fixed electrode 216 is connected to a non-inversion input terminal of the differential amplifier 229. In addition, a bias voltage is applied from the bias power supply 230 to the diaphragm 217. Meanwhile, an inversion input terminal of the differential amplifier 229 is connected to a reference voltage terminal or a GND terminal. The fixed terminal 216 and the diaphragm 217 are electrostatic-coupled, and electrostatic capacitance corresponding to a distance to the diaphragm 217 is generated on the fixed electrode 216, by the bias voltage which is applied to the diaphragm 217. When sound waves are propagated from an outside, the diaphragm 217 is vibrated by its sound waves, and by this vibration, a distance between the diaphragm 217 and the fixed electrode 216 is changed. Therefore, a minute electric current is generated by such a matter that electrostatic capacitance which is generated on the fixed electrode 216 is changed. Then, a signal voltage obtained by such a matter that this minute electric current flows through a resistance device with a high resistance value is amplified by the differential amplifier, and thereby, it is possible to take out propagated sound waves as a sound signal from an output terminal 231.

Meanwhile, the bias voltage which is applied to the diaphragm 214, and the bias voltage which is applied to the diaphragm 217 are preferably set up to different values in case of operating and using it as a microphone and in case of operating and using it as a loudspeaker. For example, a bias voltage at the time of operating and using it as a loudspeaker may be set up to a value with a larger absolute value than a bias voltage at the time of operating and using it as a microphone.

In this manner, in the acoustic device of the invention, it is possible to use a capacitor type device of such a type that a fixed electrode is of one layer and of such a type that it is of two layers. However, in the following explanation, a case that a capacitor type device of such a type that a fixed electrode is of two layers is used will be described as an example.

Next, changeover of a case of operating and using a capacitor type device as a microphone and a case of operating and using it as a loudspeaker will be described. In the acoustic device of the invention, as described on the basis of Figs. 16A through 16D, it is possible to use a capacitor type device as a loudspeaker or a microphone. In addition, in the acoustic device 201, changeover of connections of the power amplifier 221, the bias power supply 222, the differential amplifier 223, and the bias power supply 224, to the flat capacitor type device 211 is carried out by a changeover unit 234.

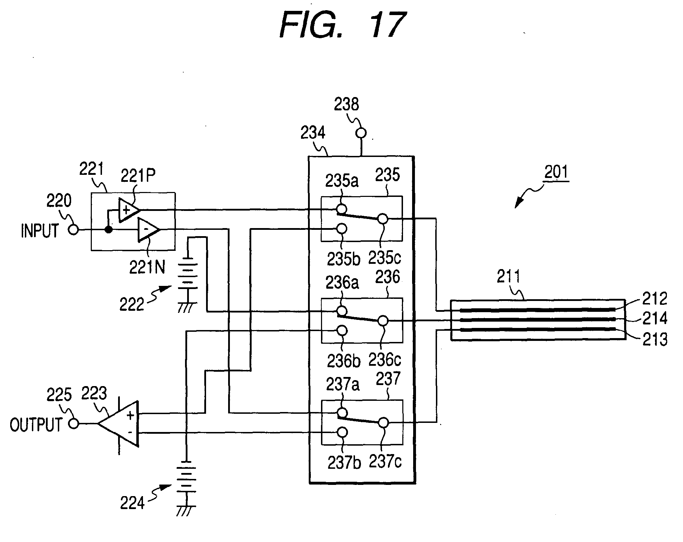

Fig. 17 is a block diagram which shows a schematic configuration of the acoustic device. As shown in Fig. 17, the changeover unit 234 is equipped with double-throw type switches 235 through 237, and a changeover control terminal 238. As to the switch 235, a fist terminal 235a is connected to an output side of the non-inversion voltage amplifier 221 P of the power amplifier 221, and a second terminal 235b is connected to a non-inversion input terminal of the differential amplifier 223, and a common terminal 235c is connected to the fixed electrode 212 of the flat capacitor type device 211, respectively. As to the switch 236, a first terminal 236a is connected to the bias power supply 222, and a second terminal 236b is connected to the bias power supply 224, and a common terminal 236c is connected to the diaphragm 214 of the flat capacitor type device 211, respectively. As to the switch 237, a first terminal 237a is connected to an output terminal of the inversion voltage amplifier 221N of the power amplifier 221, and a second terminal 237b is connected to an inversion input terminal of the differential amplifier 223, and a common terminal 237c is connected to the fixed electrode 213 of the flat capacitor type device 211, respectively. In addition, a resistor not shown in the figure is connected between the inversion input terminal and the non-inversion input terminal of the differential amplifier 223, for the purpose of suppressing influence of radiation noise etc.

In the changeover unit 234, it is set up in such a .manner .that, depending on a control signal input from the changeover control terminal 238, the switches 235 through 237 carry out opening/closing operations in conjunction with each other. That is, when a first control signal is input from the changeover control terminal 238, the switches 235 through 37 are all switched over to a fist terminal side, and when a second control signal is input from the changeover control terminal 238, the switches 235 through 237 are all switched over to a second terminal side. By this means, depending on a signal input from the changeover control terminal 238, it is possible to change over the acoustic device 201 and use it as a loudspeaker or a microphone.

Meanwhile, it is also possible to change the bias power supply, which applies a bias voltage to the diaphragm 214 of the flat capacitor type device 211, to a configuration which is as follows, in lieu of such a configuration that the bias power supply 222 and the bias power supply 224 are changed over by the switch 236 as described above. That is, it is also possible to configure in such a manner that a bias power supply for applying a bias voltage is always connected to the diaphragm 214 of the flat capacitor type device 211, and a bias voltage, which is applied from the bias power supply, is changed over to a different value depending on a control signal.

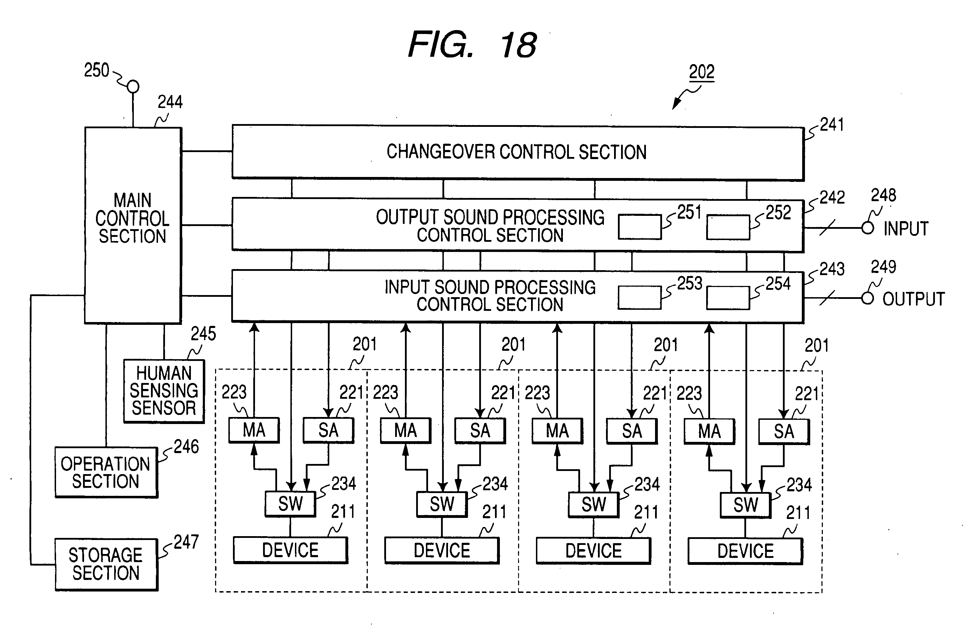

Next, a configuration of an acoustic input and output apparatus will be described. Fig. 18 is a block diagram which showed a schematic configuration of the acoustic input and output apparatus. An acoustic input and output apparatus 202 is equipped with a plurality of the acoustic devices (Fig. 18 shows four acoustic devices 201.), a changeover control section 241, an output sound processing control section 242, an input sound processing control section 243, a main control section 244, a human sensing sensor 245, an operation section 246, a storage section 247, a signal input terminal 248, a signal output terminal 249, and a control signal terminal 250.

The changeover control section 241 is connected to the changeover control terminal 238 of the changeover unit 234 in each acoustic device 201, and outputs a control signal, and carries out changeover for the purpose of using each acoustic device 201 as a loudspeaker or a microphone.

The output sound processing control section 242 is connected to an input terminal of each acoustic device 201. The output sound processing control section 242 is equipped with an output sound quality adjustment section 251 which carries out correction of a frequency characteristic of sounds which are released from the acoustic device 201. In addition, the output sound processing control section 242 is equipped with an output gain adjustment section 252 which carries out output gain adjustment of sounds which are released from the acoustic device 201, in case of using the flat capacitor type device 211 as a loudspeaker.

The input sound processing control section 243 is connected to an output terminal of each acoustic device 201. The input sound processing control section 243 is equipped with an input sound quality adjustment section 253 which carries out correction of a frequency characteristic of sounds which are released in the acoustic device 201, in case of using the flat capacitor type device 211 of the acoustic device 201 as a microphone. In addition, the input sound processing control section 243 is equipped with an input gain adjustment section 254 which carries out input gain adjustment of sounds which are collected in the acoustic device 201, in case of using the flat capacitor type device 211 of the acoustic device 201 as a microphone.

The main control section 244 outputs a control signal to the changeover control section 241, the output sound processing control section 242, and the input sound processing control section 243, and controls operations of these respective sections.

The human sensing sensor 245 judges presence or absence of a speaker and a listener which are present in front of each acoustic device 201 of the acoustic input and output apparatus 202.

The operation section 246 is an element for carrying out setup etc. of a use mode, depending on an input of positional information of a speaker and a listener, and a use type of the acoustic input and output apparatus 202.

The storage section 247 stores one or a plurality of arranging patterns of the flat capacitor type devices 11 which are operated as microphones, arranging patterns of the flat capacitor type devices 211 which are operated as loudspeakers, and concord arranging patterns which correspond to arranging patterns selected by another acoustic input and output apparatus 202.

The signal input terminal 248 inputs a sound signal output from a separate acoustic input and output apparatus 202, and includes a plurality of terminals which are connected to the input terminal 220 of each acoustic device 201 through the output sound processing control section 242.

The signal output terminal 249 is an element for outputting a sound signal to a separate acoustic input and output apparatus 202, and includes a plurality of terminals which are connected to the output terminal 225 of each acoustic device 201 through the input sound processing control section 243.

The control signal terminal 250 is an element for connecting between the main control sections 244 of respective acoustic input and output apparatuses 202, for the purpose of exchanging information with a separate acoustic input and output apparatus 202.

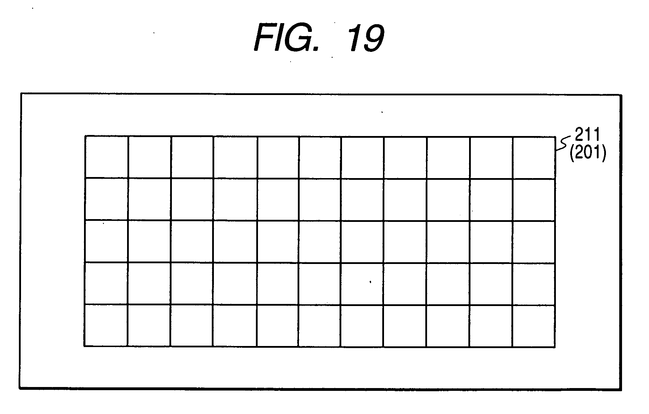

Fig. 19 shows one example of a front view of the acoustic input and output apparatus. As shown in Fig. 19, the acoustic input and output apparatus 202 is configured in such a manner that a plurality of the flat capacitor type devices 211 of the acoustic devices 201 are allocated adjacently in a panel shape. Fig. 19 shows a panel shaped acoustic input and output apparatus 202 in which the flat capacitor type devices 211 with 55 pieces in total including 5 pieces vertically and 11 pieces horizontally are arranged in matrix, as one example.

It is desirable that the acoustic input and output apparatus 202 is configured, for example, as a wall hanging type apparatus like a white board, and is configured as a stand-alone type apparatus like a white board. In addition, if a surface of the panel shaped acoustic input and output apparatus 202 is configured by white color, it is possible to use it as a projection type television screen for use in a television conference system.

Meanwhile, the number and a shape of the acoustic device 201 of the acoustic input and output apparatus 202 are not limited to ones shown in the figures.

The acoustic input and output apparatus 202 can set up each acoustic device 201 individually so as to be operated as a microphone or a loudspeaker, on the basis of positional information of a speaker and listeners, which is input from the human sensing sensor 245 and the operation section 246, and information which has been sent from a separate acoustic input and output apparatus 202. In addition, the acoustic input and output apparatus 202 can group such acoustic devices 201 that a plurality of acoustic devices 201 are arranged in matrix as described above for each row, and can set up them so as to be operated as microphones or loudspeakers with respect to each group.

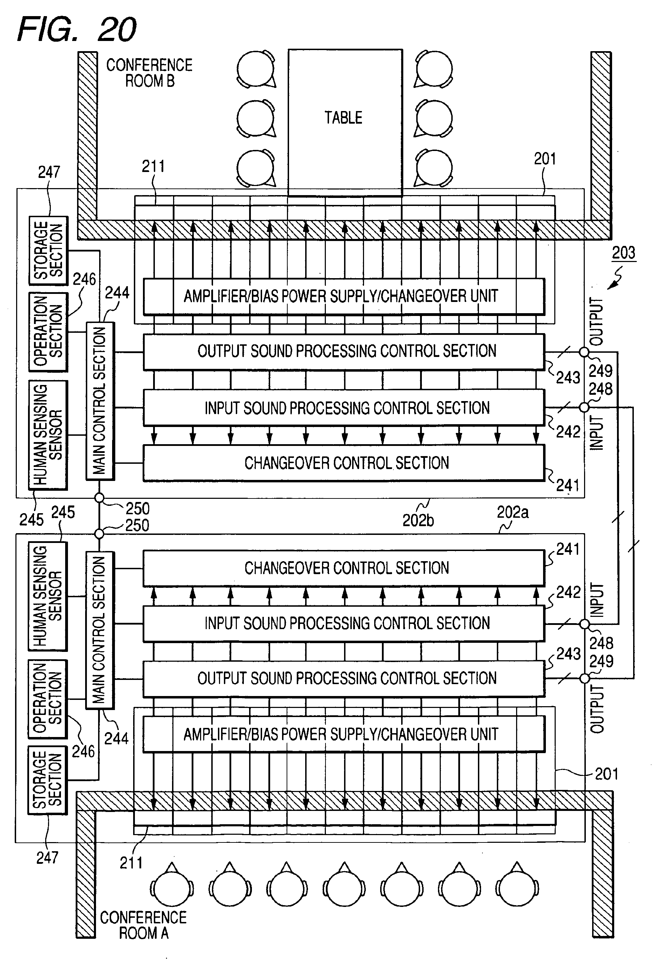

Fig. 20 is a block diagram which shows a schematic configuration of a remote conference system which relates to the fifth embodiment of the invention. Fig. 20 shows a remote conference system 203 with a minimum configuration by use of two units of the acoustic input and output apparatuses 202.

In case of configuring the remote conference system 203 by use of the two units of the acoustic input and output apparatuses 202, the signal input terminal 248 of the acoustic input and output apparatus 202 installed in a conference room A side (hereinafter, also referred to as acoustic input and output apparatus 202a) is connected to the signal output terminal 249 of the acoustic input and output terminal 202 installed in a conference room B side (hereinafter, also referred to as acoustic input and output apparatus 202b), and the signal output terminal 249 of the acoustic input and output apparatus 202a installed in the conference room A side and the signal input terminal 248 of the acoustic input and output apparatus 202b installed in the conference room B side are connected. In addition, the control signal terminal 250 of the acoustic input and output apparatus 202a, and the control signal terminal 250 of the acoustic input and output apparatus 202b, are connected.

Meanwhile, connection between the both acoustic input and output apparatuses 202a, 202b is not limited if transmission/reception of a signal can be carried out, such as an audio cable, a local area network, a telephone line, Internet, electromagnetic wave communication, and infrared ray communication.

In addition, depending on a use type of the remote conference system 203, the signal input terminal 248 and the signal output terminal 249 of the acoustic input and output apparatus 202 are connected by one or a plurality of cables, and thereby, it is possible to exchange any one of monaural sounds, stereophonic sounds, and multi-channel sounds.

In the acoustic input and output apparatus 202, it is possible to adjust output gain of the flat capacitor type device 211 which is used as a loudspeaker by the output gain adjustment section 252 of the output sound processing control section 242, and furthermore, it is possible to adjust output gain, also by increasing/decreasing numerical quantity of the flat capacitor type devices 211 which are used as loudspeakers. For example, in case that output gain is small, the main control section 244 outputs a control signal to the changeover control section 241, to change over operations of the acoustic devices 201 with numerical quantity corresponding to output gain, in such a manner that the acoustic devices 201, which are operated as microphones, are operated as loudspeakers. By this means, in the acoustic input and output apparatus 202, numerical quantity of the acoustic devices 201 which are used as loudspeakers increases, and therefore, it is possible to increase total output gain in the acoustic input and output apparatus 202.

On one hand, in case that output gain is large, the main control section 244 outputs a control signal to the changeover control section 241, to change over operations of the acoustic devices 201 with numerical quantity corresponding to output gain, in such a manner that the acoustic devices 201, which are operated as loudspeakers, are operated as microphones. By this means, numerical quantity of the acoustic devices 201 which are used as loudspeakers decreases, and therefore, it is possible to decrease total output gain in the acoustic input and output apparatus 202.

In addition, in the acoustic input and output apparatus 202, as described above, it is possible to adjust input gain of the flat capacitor type device 211 which is used as a microphone by the input gain adjustment section 254 of the input sound processing control section 243, and furthermore, it is possible to adjust input gain, also by increasing/decreasing numerical quantity of the flat capacitor type devices 211 which are used as microphones. For example, in case that gain of voice sound of a speaker is large, the main control section 244 of the acoustic input and output apparatus 202 outputs a control signal to the changeover control section 241, to change over operations of the acoustic devices 201 with numerical quantity corresponding to gain, in such a manner that the acoustic devices 201, which are operated as microphones, are operated as loudspeakers. By this means, numerical quantity of the acoustic devices 201 which are used as microphones decreases, and therefore, it is possible to decrease total input gain in the acoustic input and output apparatus 202.

On one hand, in case that gain of voice sound of a speaker, which is detected in the acoustic device 201 operating as a microphone in the acoustic input and output apparatus 201, is small, the main control section 244 outputs a control signal to the changeover control section 241, to change over operations of the acoustic devices 201 with numerical quantity corresponding to gain, in such a manner that the acoustic devices 201, which are operated as loudspeakers, are operated as microphones. By this means, numerical quantity of the acoustic devices 201 which are used as microphones increases, and therefore, it is possible to increase total output gain in the acoustic input and output apparatus 202.

Next, in the remote conference system 203, it is possible to have it operated in such a manner that the acoustic input and output apparatus 202, which detected voice sound of a speaker, increases a ratio of the acoustic devices 201 which are operated as microphones, and the acoustic input and output apparatus 202, which releases this voice sound of the speaker, increases a ratio of the acoustic devices 1 which are operated as loudspeakers. In case of setting up this mode, it is possible to set up/change in advance, from the operation section 246, a ratio of the acoustic devices 201 which are operated as loudspeakers and the acoustic devices 201 which are operated as microphones. When this mode is set up, the main control section 244 of the acoustic input and output apparatus 202 exchanges information with the main control section 244 of another acoustic input and output apparatus 202, so that setup is also carried out in another acoustic input and output apparatus 202 so as to change a ratio of the acoustic devices 201 which are operated as loudspeakers and the acoustic devices 201 which are operated as microphones. When voice sound of a speaker is detected in any acoustic input and output apparatus 202, the main control section 244 of that acoustic input and output apparatus 202 outputs a control signal to the changeover control section 241, to increase a ratio of the acoustic devices 201 which are operated as microphones, and in another acoustic input and output apparatus 202, the main control section 244 of that acoustic input and output apparatus 202 outputs a control signal to the changeover control section 241, to increase a ratio of the acoustic devices 201 which are operated as loudspeakers. By this means, in the remote conference system 203, it is possible to surely pick up voice sound of a speaker in the acoustic input and output apparatus 202 on a speaker side, and it is possible to surely release voice sound of the speaker in the acoustic input and output apparatus 202 on a listener side.

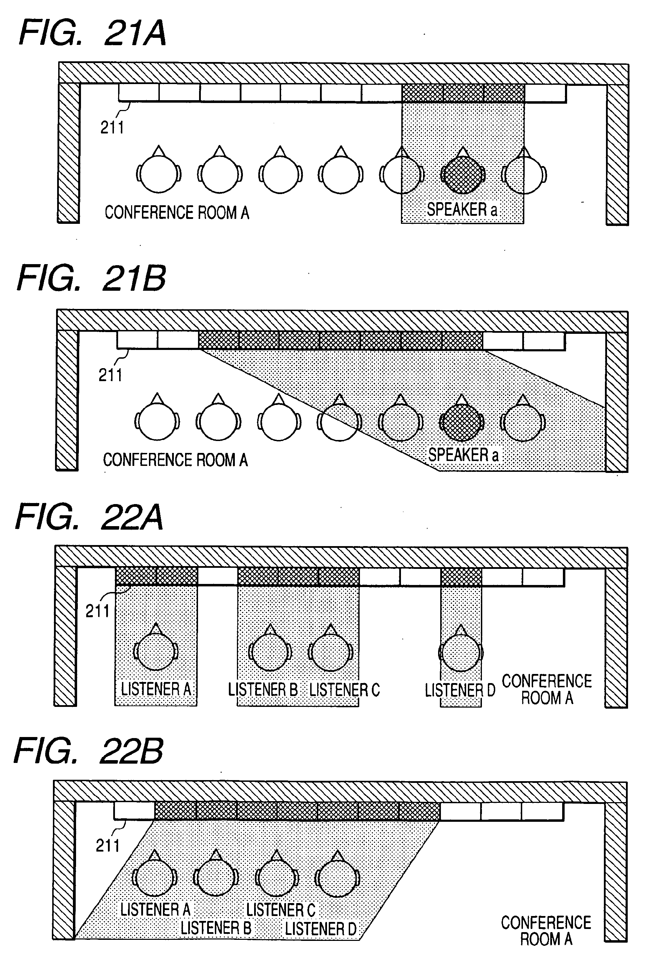

Figs. 21A and 21 B are views which show a control example of microphone arrangement at the time of detecting a speaker. In the remote conference system 203, in case that a position of a speaker to the acoustic input and output apparatus 202 has been determined in advance, and in case that the acoustic input and output apparatus 202 detected voice sound of a speaker in the acoustic device 201 which is operated as a microphone, it is possible to set up the acoustic device 201 in the vicinity of a position where that voice sound is detected so as to be operated as a microphone, and set up other acoustic devices 201 so as to be operated as loudspeakers.

For example, in case that a person who says something is fixed to a speaker a in a remote conference, the main control section 244 of the acoustic input and output apparatus 202 outputs a control signal to the changeover control section 241, to have the acoustic devices 201 in the vicinity of the speaker a operated as microphones, and to have other acoustic devices 201 operated as loudspeakers, as shown in Fig. 21A.

In addition, in case that a person who says something is not fixed to the speaker a in a remote conference, the main control section 244 of the acoustic input and output apparatus 202 outputs a control signal to have all of one stage portion of matrix-allocated panel shaped acoustic devices 201 operated as microphones. Then, when any one of the acoustic devices 201 which are operated as microphones detects at certain timing that the speaker a started statement, the main control section 244 of the acoustic input and output apparatus 202 outputs a control signal to the changeover control section 241, to change over in such a manner that the acoustic devices 201 in the vicinity of the speaker a (in the figure, three rows of the acoustic devices 201) are operated as microphones and other acoustic devices 201 are operated as loudspeakers, as shown in Fig. 21 A.

By this means, it is possible to effectively collect voice sound of a speaker.

Next, in the remote conference system 203, in case that a position of a speaker to the acoustic input and output apparatus 202 has been determined in advance, and in case that voice sound of a speaker is detected in the acoustic device 201 which is operated as a microphone, positional information of the speaker is set up, and on the basis of this positional information of the speaker, it is set up in such a manner that a plurality of the acoustic devices 201, which are operated as microphones, are allocated in a row shape. Then, in order for a directivity of sound pickup to be in a direction of a speaker, sound pickup timing of each acoustic device 201 is adjusted to form a microphone array for combining voice sounds which are output by respective acoustic devices 201, and thereby, it is possible to control a directivity of sound pickup.

For example, in case that a person who says something is fixed to the speaker a in a remote conference, the main control section 244 of the acoustic input and output apparatus 202 outputs a control signal to the changeover control section 241, and on the basis of positional information of the speaker a as shown in Fig. 21 B, it is set up in such a manner that the acoustic devices 201, which are operated as microphones, are allocated in a row shape. In addition, the main control section 244 outputs a control signal to the input sound processing control section 243, to change sound pickup timing of each acoustic device 201 individually, in such a manner that a directivity of sound pickup becomes in a direction of the speaker a, and has them operated in so as to combine sound pickup signals of respective acoustic devices 201 Furthermore, the main control section 244 outputs a control signal to the changeover control section 241 and the output sound processing control section 242, to have remaining acoustic devices 201 operated as normal loudspeakers.

In addition, in case that a person who says something is not fixed to the speaker a in a remote conference, when it is detected in the acoustic device 201 which is operated as a microphone that the speaker a started statement at certain timing during a period of a remote conference, the main control section 244 of the acoustic input and output apparatus 202 outputs a control signal to the changeover control section 241, to set up on the basis of positional information etc. of the acoustic device 201 which detected voice sound of the speaker a, in such a manner that the acoustic devices 201, which are operated as microphones, are allocated in a row shape. The main control section 244 changes sound pickup timing of each acoustic device 201 individually, in such a manner that a directivity of sound pickup becomes in a direction of the speaker a, and outputs a control signal to the input sound processing control section 243, so as to combine sound pickup signals of respective acoustic devices 201. In addition, the main control section 244 outputs a control signal to the input sound processing control section 244, to have remaining acoustic devices 1 operated as normal loudspeakers.

By this means, by the acoustic devices 201 which are operated as microphones, it is possible to configure a microphone array in which a directivity of sound pickup is set up to a direction of the speaker a, and it is possible to surely collect only voice sound of the speaker a, and in addition, by other acoustic devices 201 which are operated as loudspeakers, it is possible to surely release voice sound collected by the acoustic input and output apparatus 202 installed in a separate conference room.

Here, in case that the microphone array is formed by the acoustic devices 201 in the acoustic input and output apparatus 202, it is possible to control a directivity of sound pickup by delaying detection timing of voice sound depending on a distance between each acoustic device 201 and a speaker.

Meanwhile, in case that the operations explained on the basis of Figs. 7A and 7B are set up in the acoustic input and output apparatus 202, it is preferable that the acoustic devices 201 operated as loudspeakers are switched at regular periods to be operated as microphones, or one stage portion of the acoustic devices 201 is always operated as microphones. By this means, even in case that another conference attendant started statement, it is possible to collect voice sound of another speaker by immediately setting up the acoustic device in the vicinity of that speaker so as to be operated as a microphone, and changing arrangement of the microphone array.

Figs. 22A and 22B is a view which shows a loudspeaker arrangement control example by detection of a position of a listener. In the remote conference system 203, in case that positions of listeners to the acoustic input and output apparatus 202 have been determined in advance, and in case that positions of listeners are detected by the human sensing sensors 245, it is possible to set up the acoustic devices 201 in the vicinity of positions where positions of listeners are set up, so as to be operated as loudspeakers, by setting up the positions of listeners, and to set up other acoustic devices 201 so as to be operated as microphones.

For example, as shown in Fig. 22A, in case that positions of listeners are fixed in a conference room A, the main control section 244 of the acoustic input and output apparatus 202 outputs a control signal to the changeover control section 241, to have the acoustic device 201 in the vicinity of a position of each listener operated as a loudspeaker, and to have other acoustic devices 201 operated as microphones.

In addition, in the conference room A, in case that listeners A through D, who are located as shown in Fig. 22A, are detected by the human sensing sensors 245 at certain .timing, the main control section 244 of the acoustic input and output apparatus 2 outputs a control signal to the changeover control section, to set up the acoustic devices 201 in the vicinity of positions of listeners so as to be operated as loudspeakers, and to set up other acoustic devices 201 so as to be operated s microphones.

By this means, voice sound is released from a loud speaker in front of each listener (acoustic device 201 which is operated as a loudspeaker), and therefore, it is possible for each listener to surely listen voice sound of a speaker who is saying something in a separate conference room.

Next, in the remote conference system 203, in case that positions of listeners to the acoustic input and output apparatus 202 have been determined in advance, and in case that positions of listeners are detected by the human sensing sensors 245, it is set up on the basis of this positional information of the speaker, in such a manner that a plurality of the acoustic devices 201, which are operated as loudspeakers, are allocated in a row shape and, in order for a directivity of sound pickup to becomes in a direction of a speaker, a loudspeaker array is formed in which sound pickup timing of each acoustic device 1 is adjusted, and thereby, it is possible to control a directivity of sound release.

For example, as shown in Fig. 22B, in case that positions of listeners in a conference room A are fixed, the main control section 244 of the acoustic input and output apparatus 202 outputs a control signal to the changeover control section 241, on the basis of positional information of each listener (listeners A through D), to set up a plurality of the acoustic devices 201, which are operated as loudspeakers, in such a manner that they realize row shaped arrangement. In addition, the main control section 244 outputs a control signal to the output sound processing control section 242, and changes sound release timing of each acoustic device 201 individually, so as for a directivity of sound release to.becomes in a direction of the listeners A through D, to have sound released from each acoustic device 201. Further, the main control section 244 outputs a control signal to the changeover control section 241 and the input sound processing control section 243, to have remaining acoustic devices 201 operated as normal microphones.

In addition, when the listeners A through D are detected by the human sensing sensors 245 at certain timing, the main control section 244 of the acoustic input and output apparatus 202 outputs a control signal to the changeover control section 241, on the basis of positional information of the listeners A through D, to have a plurality of the acoustic devices 201 operated as loudspeakers, and form a loudspeaker array with appropriate arrangement, and to have sound from a separate acoustic input and output apparatus 202 released in the direction of the listeners A through D.

By this means, it is possible to configure a loudspeaker array in which a directivity of sound release is set up to the direction of the listeners A through D, by use of the acoustic devices 1 which are operated as loudspeakers, and it is possible to surely release sounds to the direction of the listeners A through D, and in addition, it is possible to surely collect voice sound of a speaker utilizing the acoustic input and output apparatus 202 installed in a separate conference room, by use of other acoustic devices 201 which are operated as microphones.

Here, in case that a loudspeaker array is formed by use of the acoustic devices 201 in the acoustic input and output apparatus 202, it is possible to control a directivity of sound release, by adjusting output timing of voice sound, depending on a distance between each acoustic device 201 and a speaker.

In the above-described explanation, setup in case of using the remote conference system 203 in a normal conference mode is described, but in the remote conference system 203, it is possible to change over an operation of each acoustic device 201 in the acoustic input and output apparatus 202, by setting up different use modes depending on a use type of the acoustic input and output apparatus 202.

For example, in the remote conference system 203, a shared viewing/listening mode is set up, and an output of a sound output device such as a CD player and a computer (PC) is connected to an input terminal of each acoustic input and output apparatus 202, and thereby, it is possible to concurrently listen monaural sounds or stereophonic sounds (external input sounds), which are output from the sound output device, by each acoustic input and output apparatus 202. In case that the shared viewing/listening mode is set up, the main control section 244 of each acoustic input and output apparatus 202 controls the changeover control section 241, to have all of respective acoustic devices 201 operated as loudspeakers. Therefore, the acoustic input and output apparatus 202 outputs external input sounds from all acoustic devices 201, and therefore, each listener can listen impressive sounds.

In addition, by setting up a lecture mode in the remote conference system 203, it can be used as a sound pickup/sound amplification device for a lecture. That is, when this lecture mode is set up, the main control section 244 of the acoustic input and output apparatus 202 on a speaker (lecturer) side controls the changeover control section 241, to set up respective acoustic devices 201 so as to be all operated as microphones. In addition, the main control section 244 of the acoustic input and output apparatus 202 on a listener side controls the changeover control section 241, to set up respective acoustic devices 201 so as to be all operated as loudspeakers. Then, it is set up in such a manner that monaural sounds or stereophonic sounds collected in the acoustic input and output apparatus 202 on the speaker side are released from the acoustic input and output apparatus 202 on the listener side. Therefore, on the speaker side, a loudspeaker for hearing sounds of a listener side of a lecture is not disposed, and therefore, a speaker can concentrate on a lecture, and in addition, it is possible to surely collect voice sound of the speaker. In addition, in the acoustic input and output apparatus 202 on the listener side, all acoustic devices 201 are operated as loudspeakers, and therefore, listeners can listen sounds with feeling of being on the place, with appropriate sound volume.

In addition, by setting a concert mode in the remote conference system 203, it can be used as a PA system in case that a player and audience are present in separate halls. In case of setting up this mode, the signal input terminal 148 which is coupled to each acoustic device 1, and the signal output terminal2 49 which is coupled to each acoustic device 201, are connected in such a manner that the acoustic device 201 which collected sounds in the acoustic input and output apparatus 202 installed on a player side, and the acoustic device 201 which releases sounds in the acoustic input and output apparatus 202 installed on an audience side, are allocated at corresponding positions.

When a user operates the operation section 246 and sets up this concert mode, the main control section 244 of the acoustic input and output apparatus 202 on the player side controls the changeover control section 241, to set up in such a manner that all acoustic devices 201 are operated as multi-channel microphones. In addition, the main control section 244 of the acoustic input and output apparatus 202 on the audience side controls the changeover control section 241, to set up in such a manner that all acoustic devices 201 are operated as multi-channel loudspeakers. Therefore, multi-channel sounds with a plenty of feelings of existence on the place, which are collected by a plurality of microphones in one acoustic input and output apparatus 202, can be released from a plurality of loudspeakers in the other acoustic input and output apparatus 202 as multi-channel sounds without change, and therefore, audience can enjoy sounds with high feeling of being on the place.

In addition, the remote conference system (television conference system) 203 is not limited to such a type that two units of the acoustic input and output apparatuses 202 are connected in a one-to-one manner. It is preferable that it is configured in such a manner that three or more units of the acoustic input and output apparatuses 202 are connected in a star type or a diagonal line type. A transmission method of sound signals between respective acoustic input and output apparatuses is arbitrary. It is free even if a plurality of transmission methods exist in a mixed manner.

For example, in case of installing the acoustic input and output apparatuses 202 in three conference rooms to carry out three-directional communication by setting up a three-directional communication mode in the remote conference system 203, the main control section of each acoustic input and output apparatus 202 controls the changeover control section 241, to set up in such a manner that it uses a right half of the flat capacitor type devices 211 formed in a panel shape, for exchange of sounds with one conference room, and uses a left half for exchange of sounds with the other conference room. By this means, in case of carrying out a remote conference in three conference rooms, it is possible to easily judge that a speaker of which conference room is saying something, and it is possible to smoothly proceed the remote conference.

In the remote conference system 203, when a use mode as described above is selected by the operation section 246 in any acoustic input and output apparatus 202, the main control section 244 of that acoustic input and output apparatus 202 reads out an arranging pattern of microphones and loudspeakers in the selected use mode from the storage section 247. Then, it outputs a control signal to the changeover control section 241, the output sound processing control section 242, and the input sound processing control section 243, to set up in such a manner that each flat capacitor type device 211 is operated as a microphone or a loudspeaker, on the basis of the arranging pattern read out from the storage section 247. In addition, the main control section 244 notifies information of this arranging pattern to the main control section 244 of another acoustic input and output apparatus 202 which configures the remote conference system 203.

Here, as described above, an arranging pattern for having the flat capacitor type devices 211 operated as microphones, and an arranging pattern for having the flat capacitor type devices 11 operated as loudspeakers, have been stored in advance in the storage section 247 of each acoustic input and output apparatus 202. In addition, as in the above-described lecture mode, arranging patterns of the flat capacitor type devices 211 differ between the acoustic input and output apparatus 202 on a speaker side and the acoustic input and output apparatus 202 on a listener side, and therefore, a concord arranging pattern, which corresponds to a notified arranging pattern, has been also stored in advance in the storage section 247.

Therefore, the main control section of another acoustic input and output apparatus 202, when it receives notification of arranging pattern information, reads out a concord arranging pattern which corresponds to this arranging pattern, from the storage section 247. Then, it outputs a control signal to the changeover control section 241, the output sound processing control section 242, and the input sound processing control section 243, to set up in such a manner that each flat capacitor type device 211 is operated as a microphone or a loudspeaker on the basis of the concord arranging pattern read out from the storage section 247.

As above, in the remote conference system 203, it is set up in such a manner that the flat capacitor type devices 211 are operated as microphones or loudspeakers, in order to realize optimum arrangement of microphones and loudspeakers depending on positions of a speaker and listeners. In addition, in the remote conference system 203, an arranging pattern of microphones and loudspeakers which is set up in advance in each acoustic input and output apparatus 202, depending on a use mode set up by the operation section 246, or a concord arranging pattern which corresponds to this arranging pattern, is set up. Therefore, in the invention, it is possible to provide a remote conference system in which it is very easy to carry out setup of conference rooms, and it is possible to change numerical quantity of microphones and loudspeakers easily, depending on positions of a speaker and listeners who attend a conference, and it is possible to set up sound pickup and sound release to an appropriate state depending on a use status.

### Sixth Embodiment

A sixth embodiment according to the invention will be described hereinafter. A capacitor type device which configure an acoustic device and a loudspeaker and a microphone using the capacitor type device according to the sixth embodiment are identical to the capacitor type device according to the fifth embodiment. Therefore, the same reference numeral and signs as those of Figs. 15A through 16D are used and an explanation of each section will be omitted.

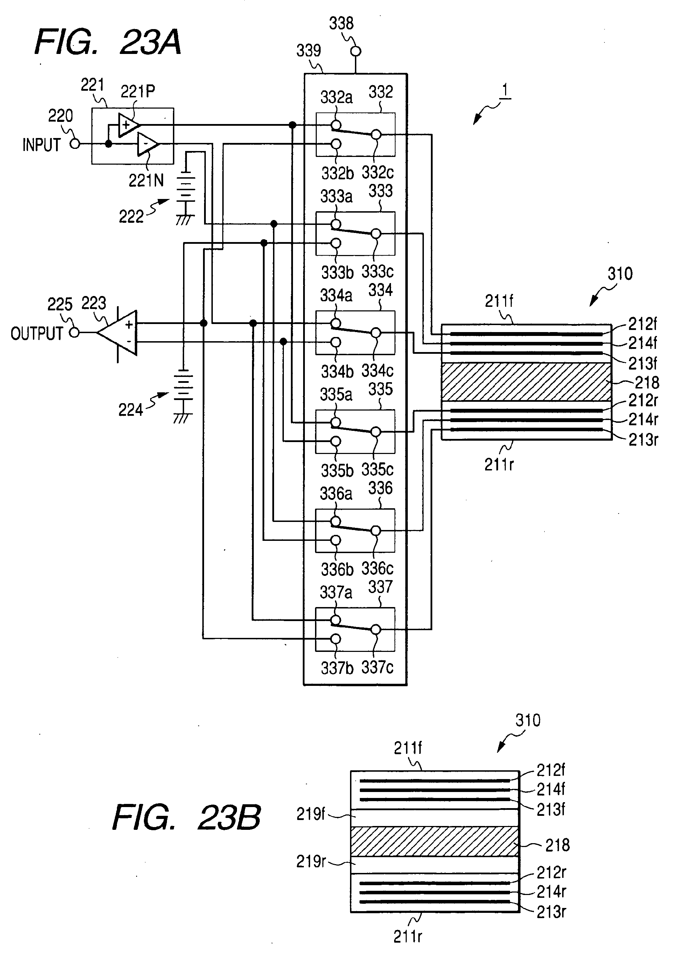

Next, a configuration of the acoustic device of the invention will be described. Figs. 23A and 23B are block diagrams which show a schematic configuration of the acoustic device. As shown in Figs. 23A and 23B, an acoustic device 301 is equipped with a panel unit 310 including two flat capacitor type devices 211f, 211r and an acoustic non-transmission layer 218, an input terminal 220, a power amplifier 221, a bias power supply 222, a differential amplifier 223, a bias power supply 224, an output terminal 225, a changeover unit 339 which has switches 332 through 337, and a changeover control terminal 338.

The flat capacitor type devices 211f, 211r, as described on the basis of Figs. 16A to 16D, are connected to the differential amplifier 223, and thereby, it is possible to have them operated as microphones which collect a sound wave which is propagated from a space where the panel unit 310 is installed, and output a signal which corresponds to that sound wave from the output terminal 225. In addition, the flat capacitor type devices 211f, 211r are connected to the power amplifier 221, and thereby, it is possible to have them operated as loudspeakers which release a sound wave which corresponds to a signal input from the input terminal 220.

The acoustic non-transmission layer 218, in case of having both of the flat capacitor type devices 211f, 211r operated as microphones or loudspeakers concurrently, cuts off propagation of a sound wave in such a manner that the sound wave is not propagated to the other. The acoustic non-transmission layer 218 may be configured by, for example, a sound absorbing material such as urethane and a rigid body such as a steel plate.

The input terminal 220 is an element for inputting a voice sound signal, on the occasion of having the flat capacitor type devices 211f, 211r operated as loudspeakers.

The power amplifier 221 N is an element for amplifying a voice sound signal input from the input terminal 220, and is equipped with a non-inversion voltage amplifier 221 P and an inversion voltage amplifier 221 N.

The bias power supply 222 applies a bias voltage to diaphragms 214f, 214r, on the occasion of having the flat capacitor type devices 211f, 211r operated as loudspeakers.

The differential amplifier 223 is an element for amplifying a voltage which is changed depending on a sound wave propagated from an outside, on the occasion of having the flat capacitor type devices 211f, 211r operated as microphones.

The bias power supply 224 applies a bias voltage to the diaphragms 214f, 214r, on the occasion of having the flat capacitor type devices 211f, 211 r operated as loudspeakers.

The changeover unit 339 is an element which carries out changeover for having the flat capacitor type devices 211 f, 211 r operated as loudspeakers or microphones concurrently, depending on a signal input from the changeover control terminal 338. The changeover unit 339 is equipped with double-throw type switches 332 through 337, and the changeover control terminal 338.

As to the switch 332, a first terminal 332a is connected to an output side of the non-inversion voltage amplifier 221 P of the power amplifier 221, and a second terminal 332b is connected to a non-inversion input terminal of the differential amplifier 223, and a common terminal 332c is connected to a fixed electrode 212f of the flat capacitor type device 211f, respectively. As to the switch 333, a first terminal 333a is connected to the bias power supply 222, and a second terminal 333b is connected to the bias power supply 224, and a common terminal 333c is connected to the diaphragm 214f of the flat capacitor type device 211f, respectively. As to the switch 334, a first terminal 334a is connected to an output terminal of the inversion voltage amplifier 221 N of the power amplifier 221, and a second terminal 334b is connected to a non-inversion input terminal of the differential amplifier 223, and a common terminal 334c is connected to a fixed electrode 213f of the flat capacitor type device 211f, respectively.

As to the switch 335, a first terminal 335a is connected to an output side of the non-inversion voltage amplifier 221 P of the power amplifier 221, and a second terminal 335b is connected to an inversion input terminal of the differential amplifier 223, and a common terminal 335c is connected to a fixed electrode 212r of the flat capacitor type device 11 r, respectively. As to the switch 336, a first terminal 336a is connected to the bias power supply 222, and a second terminal 336b is connected to the bias power supply 224, and a common terminal 336c is connected to the diaphragm 214r of the flat capacitor type device 211r, respectively. As to the switch 337, a first terminal 337a is connected to an output terminal of the inversion voltage amplifier 221 N of the power amplifier 221, and a second terminal 337b is connected to a non-inversion input terminal of the differential amplifier 223, and a common terminal 337c is connected to a fixed electrode 213r of the flat capacitor type device 211 r, respectively.

Meanwhile, between the inversion input terminal and the non-inversion input terminal of the differential amplifier 223, a resistor, which is not shown in the figure, is connected for the purpose of suppressing influence of radiation noise etc.

The changeover unit 339 is set up in such a manner that opening/closing operations of the switches 332 through 337 are carried out in an interlocked manner, depending on a control signal input from the changeover control terminal 338. That is, when a first control signal is input from the changeover control terminal 338, all of the switches 332 through 337 are switched to first terminal sides, and when a second control signal is input from the changeover control terminal 338, all of the switches 332 through 337 are switched to second terminal side. By this means, it is possible to change over the panel unit 310 of the acoustic device 301 to use it as a loudspeaker or a microphone, depending on a signal input from the changeover control terminal 338.

The panel unit 310 is of such a configuration that, as shown in Fig. 16A, the flat capacitor type devices 211f, 211r are contacted to the acoustic non-transmission layer 218, in such a manner that the flat capacitor type device 211f disposed toward a front surface, and the flat capacitor type device 211f disposed toward a rear surface are disposed back to back, with sandwiching the acoustic non-transmission layer 218. In addition, it is configured in such a manner that the fixed electrode 213f of the flat capacitor type device 211f and the fixed electrode 212r of the flat capacitor type device 211 r are opposed to the acoustic non-transmission layer 218. By configuring in this manner, it is possible to prevent a sound wave from propagating from one flat capacitor type device 211 to the other flat capacitor type device 211.

In addition, air layers 219f, 218r may be disposed between the flat capacitor type device 211f and the acoustic non-transmission layer 218, and between the flat capacitor type device 211r and the acoustic non-transmission layer 218, as shown in Fig. 23B. By this means, on the occasion of having the flat capacitor type devices 211f, 211r operated as loudspeakers, it is possible to improve a signal level and a frequency characteristic, as compared to such a case that the air layers 219f, 219r are not disposed.

In the panel unit 210, the changeover unit 239 and each section are connected as described above, and therefore, in case that each switch 332 through 337 is switched to the first terminal side and the flat capacitor type devices 211f, 211r are operated as loudspeakers concurrently, a sound wave in normal phase is released in a front surface direction from the flat capacitor type device 211f, and a sound wave in opposite phase is released in a rear surface direction from the flat capacitor type device 211 r, with conditions of the same amplitude, frequency characteristic etc.

In addition, in the panel unit 310, in case that each switch 332 through 337 is switched to the second terminal side and the flat capacitor type devices 211f, 211r are operated as microphones concurrently, the flat capacitor type device 211f collects a sound wave propagated from a front surface direction, and outputs a voice sound signal in the same phase as that sound wave, and the flat capacitor type device 11r collects a sound wave propagated from a rear surface direction, and outputs a voice sound signal in the same phase as that sound wave.

Meanwhile, a bias power supply, which applies a bias voltage to the diaphragm 214 of the flat capacitor type device 211, may be configured as follows, in lieu of such a configuration that the bias power supply 222 and the bias power supply 224 are changed over as described above. That is, it is also possible to configure in such a manner that a bias power supply which applies a bias voltage is always connected to the diaphragm 214 of the flat capacitor type device 211 and a bias voltage, which is applied from the bias power supply, is switched to a different value, depending on a control signal.

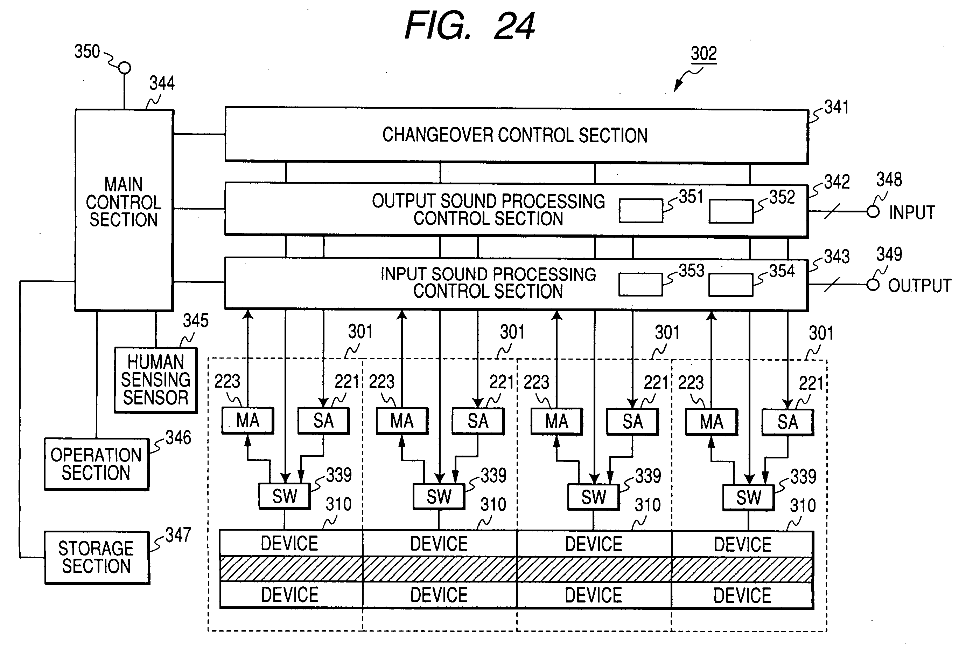

Next, a configuration of an acoustic input and output apparatus will be described. Fig. 24 is a block diagram which showed a schematic configuration of the acoustic input and output apparatus. An acoustic input and output apparatus 2 is equipped with a plurality of the acoustic devices (Fig.4 shows four acoustic devices 301.), a changeover control section 341, an output sound processing control section 342, an input sound processing control section 343, a main control section 344, a human sensing sensor 345, an operation section 346, a storage section 347, a signal input terminal 348, a signal output terminal 349, and a control signal terminal 350.

The changeover control section 341 is connected to the changeover control terminal 338 of the changeover unit 334 in each acoustic device 301, and outputs a control signal, and carries out changeover for the purpose of using each acoustic device 301 as a loudspeaker or a microphone.

The output sound processing control section 342 is connected to an input terminal of each acoustic device 301. The output sound processing control section 342 is equipped with an output sound quality adjustment section 351 which carries out correction of a frequency characteristic of sounds which are released from the acoustic device 1. In addition, the output sound processing control section 342 is equipped with an output gain adjustment section 352 which carries out output gain adjustment of sounds which are released from the acoustic device 301, in case of using the flat capacitor type device 211 as a loudspeaker.

The input sound processing control section 343 is connected to an output terminal of each acoustic device 301. The input sound processing control section 343 is equipped with an input sound quality adjustment.section 353 which carries out correction of a frequency characteristic of sounds which are released in the acoustic device 301, in case of using the flat capacitor type device 211 of the acoustic device 301 as a microphone. In addition, the input sound processing control section 343 is equipped with an input gain adjustment section 354 which carries out input gain adjustment of sounds which are collected in the acoustic device 301, in case of using the flat capacitor type device 211 of the acoustic device 301 as a microphone.

The main control section 344 controls operations of the changeover control section 341, the output sound processing control section 342, and the input sound processing control section 343.

The human sensing sensor 345 judges presence or absence of a speaker and a listener which are present in front of each acoustic device 301 of the acoustic input and output apparatus 302.

The operation section 346 is an element for carrying out setup etc. of a use mode, depending on an input of positional information of a speaker and a listener, and a use type of the acoustic input and output apparatus 302.

The storage section 347 stores one or a plurality of arranging patterns of the flat capacitor type devices 211 which are operated as microphones, arranging patterns of the flat capacitor type devices 211 which are operated as loudspeakers, and concord arranging patterns which correspond to arranging patterns selected by another acoustic input and output apparatus 302.

The signal input terminal 348 is an element for inputting a sound signal output from a separate acoustic input and output apparatus 302, and includes a plurality of terminals which are connected to the input terminal 220 of each acoustic device 301 through the output sound processing control section 342.

The signal output terminal 349 is an element for outputting a sound signal to a separate acoustic input and output apparatus 302, and includes a plurality of terminals which are connected to the output terminal 225 of each acoustic device 301 through the input sound processing control section 343.

The control signal terminal 350 is an element for connecting between the main control sections 344 of respective acoustic input and output apparatuses 302, for the purpose of exchanging information with a separate acoustic input and output apparatus 302.

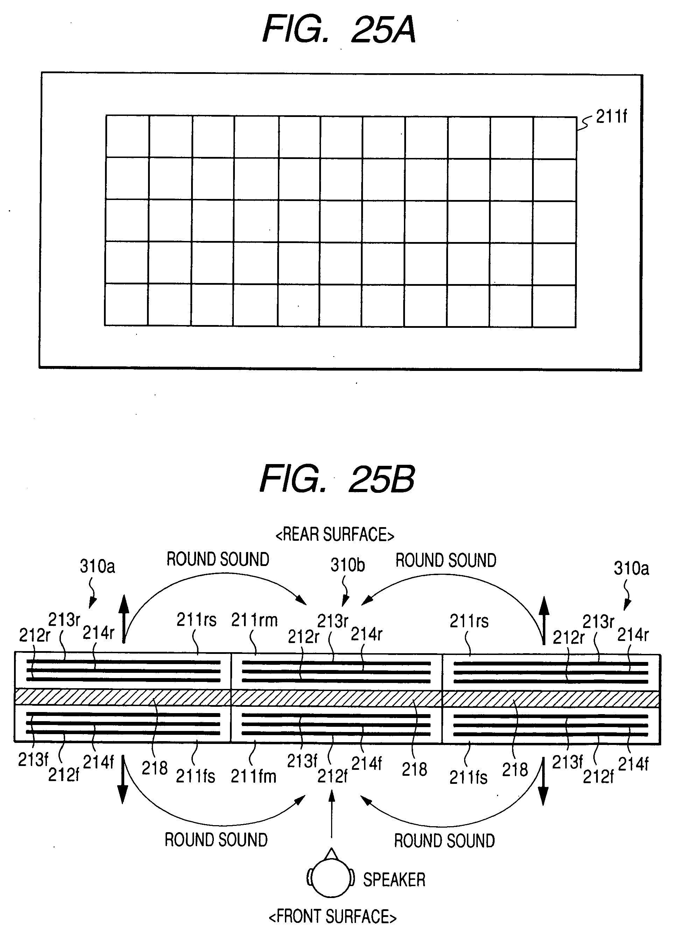

Figs. 25A and 25B is a front elevation view and a top view of the acoustic input and output apparatus. As shown in Figs. 25A and 25B, the acoustic input and output apparatus 302 is configured in such a manner that a plurality of the flat capacitor type devices 211 of the acoustic device 301 are arranged adjacently in a panel shape. Figs. 25A shows a panel shaped acoustic input and output apparatus 302 in which the flat capacitor type devices 211 with 55 pieces in total of 5 pieces vertically and 11 pieces horizontally are arranged in matrix, as one example.

It is desirable that the acoustic input and output apparatus 302 is configured, for example, as a wall hanging type apparatus like a white board, and is configured as a stand-alone type apparatus like a white board. In addition, if a surface of the panel shaped acoustic input and output apparatus 302 is configured by white color, it is possible to use it as a projection type television screen for use in a television conference system.

Meanwhile, the number and a shape of the acoustic device 301 of the acoustic input and output apparatus 302 are not limited to ones shown in Fig. 25A.

The acoustic input and output apparatus 302 can set up each acoustic device 301 individually so as to be operated as a microphone or a loudspeaker, on the basis of positional information of a speaker and listeners, which is input from the human sensing sensor 345 and the operation section. 346, and information which has been sent from a separate acoustic input and output apparatus 302. In addition, the acoustic input and output apparatus 302 can group such acoustic devices 1 that a plurality of acoustic devices 301 are arranged in matrix as described above, with respect to each row, and can set up them so as to be operated as microphones or loudspeakers with respect to each group.

As shown in Fig. 5B, in the acoustic input and output apparatus 302, in case of setting up in such a manner that the panel unit 310 which is operated as a microphone, and the panel unit 310 which is operated as a loudspeaker, are lined up alternately, sound release/sound pickup operations are carried out as follows in the acoustic input and output apparatus 302.

In case of that the flat capacitor type devices 211f, 211r, which configure the panel unit 310, is operated as loudspeakers, the flat capacitor type devices release a sound wave formed by vibration of the flat plate shaped diaphragm 214 as described above, and therefore, a sound wave to be released becomes a plane wave, and has a directivity in a front surface direction.

In addition, in the acoustic input and output apparatus 302, it is formed in such a panel shape that a plurality of the panel units 310 are laid out in a matrix, and therefore, each flat capacitor type device 11fon a front surface side is arranged in an immediately lateral positional relation in which diaphragms are present on the same plane. On that account, the flat capacitor type device 211f which is operated as a microphone on a front surface side (hereinafter, referred to as front surface side microphone 211fm.) is to be arranged at such a position that a directivity of a sound wave, which is released from the flat capacitor type device 211f which is operated as a loudspeaker on a front surface side (hereinafter, referred to front surface side speaker 211fs.), is the weakest, and rounding of voice sound into the front surface side microphone 11fm becomes the smallest. Meanwhile, a sound wave released from the flat capacitor type device 11r which is operated as a loudspeaker on a rear surface side (hereinafter, referred to as rear surface side loudspeaker 211 rs.) is cut off by the acoustic non-transmission layer 219, and therefore, there is not such a case that the diaphragm 214 of the front surface side loudspeaker 211fs is excited. In addition, also as to the rear surface side loudspeaker 211 rs and the flat capacitor type device 211 r which is operated as a microphone (hereinafter, referred to as rear surface side microphone 211rm.), they are of the same relation as the above-described relation of the front surface side loudspeaker 211fs and the front surface side microphone 211fm.

In Fig. 25B, a sound wave in normal phase, which is released to a front surface by the front surface side loudspeaker 211fs of the panel unit 310a which is operated as a loudspeaker, (loudspeaker sound) is propagated in a front surface direction, and is collected as round sound by the front surface side microphone 211fm of the panel unit 310b which is operated as a microphone. On one hand, a sound wave in opposite phase, which is released to a rear surface by the rear surface side loudspeaker 211 rs of the panel unit 310a which is operated as a loudspeaker, (loudspeaker sound) is transmitted in a rear surface direction, and is collected as round sound by the rear surface side microphone 211rm of the panel unit 310b which is operated as a microphone.

In case that sound waves in opposite phases, which are released from the front surface side loudspeaker 211 fs and the rear surface side loudspeaker 211 rs disposed on both surfaces of the panel unit 310a, are collected by the front surface side microphone 211fm and the rear surface side microphone 211 rm which are arranged at a symmetrical positional relation to the acoustic non-transmission layer 218, it can be said that these signal wave forms become signal wave forms which are in opposite phases and are almost negated. As a factor for blocking a symmetric property of wave forms, it is such a matter that space shapes differ between the front surface side and the rear surface side of an installation place of the acoustic device 301. Therefore, by combining in an adding manner an output signal of the front surface side microphone 211fm and an output signal of the rear surface side microphone 211 rm of the panel unit 310b which is operated as a microphone, it is possible to cancel round sound in the panel unit 310.

On one hand, this acoustic device 301 is generally installed against a wall of a conference room, and voice sound of statement, which is made by a speaker (conference attendant), comes from only a front surface direction, and is collected only by the front surface side microphone 211fm. In addition, since there is the acoustic non-transmission layer 218, the statement voice sound of the speaker is not propagated to the rear surface side microphone 211rm. In sum, the front surface side microphone 211fm collects the statement voice sound of the speaker and loudspeaker sound in normal phase, and the rear surface side microphone 211 rm collects only loudspeaker sound in opposite phase.

Therefore, if an output signal of the front surface side microphone 211fm and an output signal of the rear surface side microphone 211rm are combined in an adding manner, loudspeaker sounds, which are collected by the both microphones as signals in opposite phases mutually, are canceled, and substantially, such a state that there is no round of voice sound from a loudspeaker is to be realized, and only statement voice sound of a speaker is taken out.

In this manner, since round sound from a loudspeaker is canceled and disappears, a signal loop of microphone → loudspeaker → microphone is cut off, to eliminate such a case that acoustic feedback and echo are generated.

As described above, there is such a case that there is a some amount of a difference as to a signal level and a frequency characteristic, between loudspeaker sound .which is collected by the front surface side microphone 211fm and loudspeaker sound which is collected by the rear surface side microphone 211rm, due to a difference etc. of space shapes on the front surface side and rear surface side. Even in this case, loudspeaker sound is attenuated to sufficiently low level, and therefore, there is not such a case that acoustic feedback is generated due to oscillation and echo is generated with such a level that conference attendants become nervous, but the loudspeaker sound is not canceled completely. On this account, in the acoustic device 301 of this embodiment, for the purpose of completely canceling this residual loudspeaker sound, it is further equipped with the output sound quality adjustment section 351, the output gain adjustment section 352, the input sound quality adjustment section 353 and the input gain adjustment section 354, as described above, and by these respective sections, it is adjusted in such a manner that vice sound collected on the front surface side and voice sound collected on the rear surface side, are negated completely and canceled.

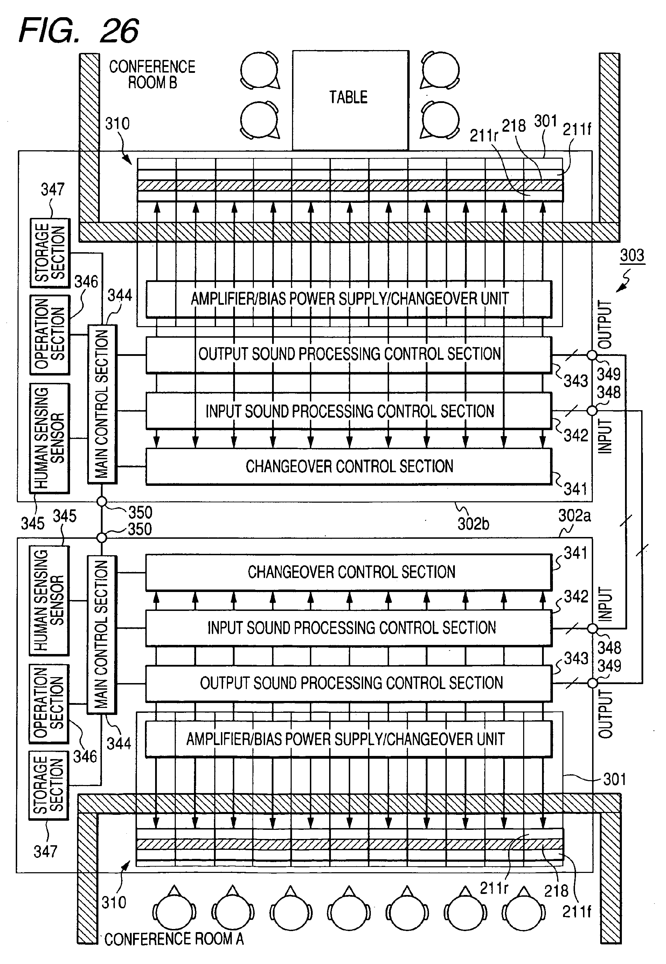

Fig. 26 is a block diagram which shows a schematic configuration of a remote conference system according to the sixth embodiment of the invention. Fig. 26 shows a remote conference system 303 with a minimum configuration by use of two units of the acoustic input and output apparatuses 302, as one example.

In case of configuring the remote conference system 303 by use of the two units of the acoustic input and output apparatuses 302, the signal input terminal 348 of the acoustic input and output apparatus 302 installed in a conference room A side (hereinafter, also referred to as acoustic input and output apparatus 302a) is connected to the signal output terminal 349 of the acoustic input and output terminal 302 installed in a conference room B side (hereinafter, also referred to as acoustic input and output apparatus 302b), and the signal output terminal 349 of the acoustic input and output apparatus 302a installed in the conference room A side, and the signal input terminal 348 of the acoustic input and output apparatus 302b installed in the conference room B side are connected. In addition, the control signal terminal 350 of the acoustic input and output apparatus 302a, and the control signal terminal 350 of the acoustic input and output apparatus 302b, are connected.

Meanwhile, connection between the both acoustic input and output apparatuses 302a, 302b is not limited if transmission/reception of a signal can be carried out, such as an audio cable, a local area network, a telephone line, Internet, electromagnetic wave communication, and infrared ray communication.

In addition, depending on a use type of the remote conference system 303, the signal input terminal 348 and the signal output terminal 349 of the acoustic input and output apparatus 302 are connected by one or a plurality of cables, and thereby, it is possible to exchange any one of monaural sounds, stereophonic sounds, and multi-channel sounds.

In the acoustic input and output apparatus 302, it is possible to adjust output gain of the flat capacitor type device 211 which is used as a loudspeaker by the output gain adjustment section 352 of the output sound processing control section 342, and furthermore, it is possible to adjust output gain, also by increasing/decreasing numerical quantity of the flat capacitor type devices 211 which are used as loudspeakers. For example, in case that output gain is small, the main control section 344 outputs a control signal to the changeover control section 341, to change over operations of the acoustic devices 301 with numerical quantity corresponding to output gain, in such a manner that the panel unit 310 (two flat capacitor type devices 211f, 211r) which is operated as a microphone, is operated as a loudspeaker. By this means, in the acoustic input and output apparatus 302, numerical quantity of the panel units 310 which are used as loudspeakers increases, and therefore, it is possible to increase total output gain in the acoustic input and output apparatus 302.

On one hand, in case that output gain is large, the main control section 244 outputs a control signal to the changeover control section 241, to change over operations of the acoustic devices 301 with numerical quantity corresponding to output gain, in such a manner that the panel unit 310, which is operated as a loudspeaker, is operated as a microphone. By this means, numerical quantity of the panel units 310 which are used as loudspeakers decreases, and therefore, it is possible to decrease total output gain in the acoustic input and output apparatus 302.

In addition, in the acoustic input and output apparatus 302, as described above, it is possible to adjust input gain of the flat capacitor type device 211 which is used as a microphone by the input gain adjustment section 354 of the input sound processing control section 343, and furthermore, it is also possible to adjust input gain, by increasing/decreasing numerical quantity of the flat capacitor type devices 211 which are used as microphones. For example, in case that gain of voice sound of a speaker is large, the main control section 344 of the acoustic input and output apparatus 302 outputs a control signal to the changeover control section 341, to change over operations of the acoustic devices 1 with numerical quantity corresponding to gain, in such a manner that the acoustic devices 301, which are operated as microphones, are operated as loudspeakers. By this means, numerical quantity of the acoustic devices 1 which are used as microphones decreases, and therefore, it is possible to decrease total input gain in the acoustic input and output apparatus 302.

On one hand, in case that gain of voice sound of a speaker, which is detected by the flat capacitor type device 211f of the panel unit 310 which is operated as a microphone in the acoustic input and output apparatus 302, is small, the main control section 344 outputs a control signal to the changeover control section 341, to change over operations of the acoustic devices 301 with numerical quantity corresponding to gain, in such a manner that the panel units 310, which are operated as loudspeakers, are operated as microphones. By this means, numerical quantity of the panel units 310 which are used as microphones increases, and therefore, it is possible to increase total output gain in the acoustic input and output apparatus 302.

Next, in the remote conference system 303, it is possible to have it operated in such a manner that the acoustic input and output apparatus 302, which detected voice sound of a speaker, increases a ratio of the panel units 310 of the acoustic devices 301 which are operated as microphones, and the acoustic input and output apparatus 302, which releases this voice sound of the speaker, increases a ratio of the panel units 310 of the acoustic device 301 which are operated as loudspeakers. In case of setting up this mode, it is possible to set up/change in advance, from the operation section 346, a ratio of the panel units 310 which are operated as loudspeakers and the panel units 310 which are operated as microphones. When this mode is set up, the main control section 344 of the acoustic input and output apparatus 302 exchanges information with the main control section 344 of another acoustic input and output apparatus 302, so that setup is also carried out in another acoustic input and output apparatus 302 so as to change a ratio of the panel units 310 which are operated as loudspeakers and the panel units 310 which are operated as microphones. When voice sound of a speaker is detected in any acoustic input and output apparatus 32, the main control section 344 of that acoustic input and output apparatus 302 outputs a control signal to the changeover control section 341, to increase a ratio of the panel units 310 which are operated as microphones, and in another acoustic input and output apparatus 302, the main control section 344 of that acoustic input and output apparatus 302 outputs a control signal to the changeover control section 341, to increase a ratio of the panel units 310 which are operated as loudspeakers. By this means, in the remote conference system 303, it is possible to surely collect voice sound of a speaker in the acoustic input and output apparatus 302 on a speaker side, and it is possible to surely release voice sound of the speaker in the acoustic input and output apparatus 302 on a listener side.

In addition, sound pickup is carried out on the front surface side and rear surface side of each panel unit 310 which is operated as a microphone, and therefore, it is possible to cancel round sounds in opposite phases mutually which are released from the front surface side and the rear surface side of each panel unit 310 which is operated as a loudspeaker, and to amplify only voice sound of a speaker which is collected one flat capacitor type device 211f, and to output it to another acoustic input and output apparatus 301.

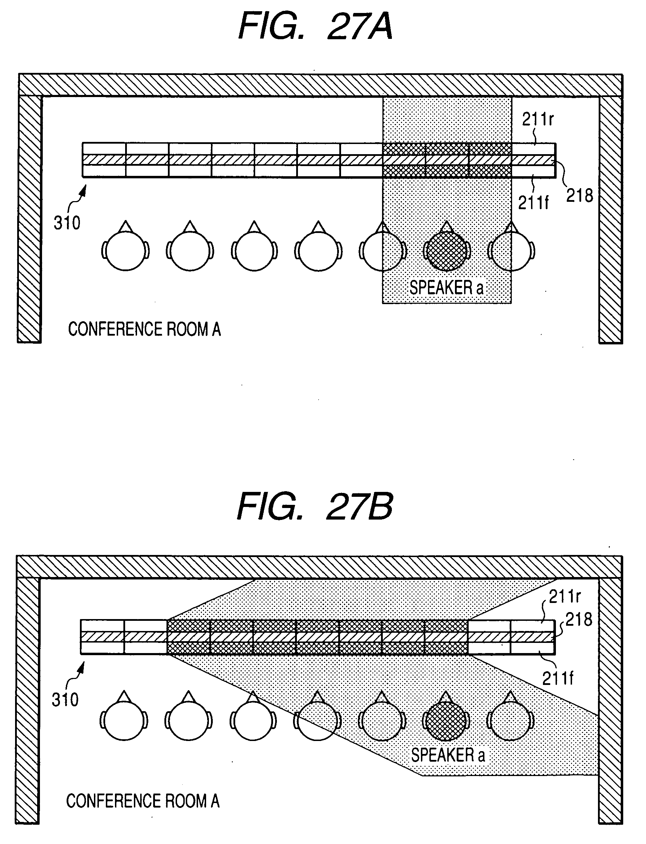

Figs. 27A and 27B are views which show a control example of microphone arrangement at the time of detecting a speaker. In the remote conference system 303, in case that a position of a speaker to the acoustic input and output apparatus 302 has been determined in advance, and in case that the acoustic input and output apparatus 302 detected voice of a speaker in the acoustic device 301 which is operated as a microphone, it is possible to set up the acoustic device 301 in the vicinity of a position where the voice is detected so as to be operated as a microphone, and set up other acoustic devices 301 so as to be operated as loudspeakers.

For example, in case that a person who says something is fixed to a speaker a in a remote conference, the main control section 344 of the acoustic input and output apparatus 302 outputs a control signal to the changeover control section 341, to have the panel units 310 (acoustic devices 301) in the vicinity of a position of the speaker a, operated as microphones, and to have other pane! units 310 operated as loudspeakers, as shown in Fig. 27A.

In addition, in case that a person who says something is not fixed to the speaker a in a remote conference, the main control section 344 of the acoustic input and output apparatus 302 outputs a control signal to have all of one stage portion of matrix-arranged panel shaped panel units 310 (acoustic devices 301) operated as microphones. Then, when any one of the front surface side microphones 211fm detects at certain timing that the speaker a started statement, the main control section 344 of the acoustic input and output apparatus 302 outputs a control signal to the changeover control section 341, to change over in such a manner that the panel units 310 in the vicinity of the speaker a (in the figure, three rows of the panel units 310) are operated as microphones and other acoustic devices 301 are operated as loudspeakers, as shown in Fig. 27A.

By this means, round sound from the front surface side loudspeaker 211fs into the front surface side microphone 211fm, and round sound from the rear surface side loudspeaker 211rs into the rear surface side microphone 211 rm are negated by combining them in an adding manner, and thereby, it is possible to collect only voice sound of a speaker, surely and effectively.

Next, in the remote conference system 303, in case that a position of a speaker to the acoustic input and output apparatus 302 has been determined in advance, and in case that voice sound of a speaker is detected by the panel unit 310 of the acoustic device 301 which is operated as a microphone, positional information of the speaker is set up, and on the basis of this positional information of the speaker, it is set up in such a manner that a plurality of the panel units 310, which are operated as microphones, are arranged in a row shape. Then, in order for a directivity of sound pickup to be in a direction of a speaker, sound pickup timing of each acoustic device 301 is adjusted to form a microphone array for combining voice sounds which are output by respective acoustic devices 301, and thereby, it is possible to control a directivity of sound pickup.

For example, in case that a person who says something is fixed to the speaker a in a remote conference, the main control section 344 of the acoustic input and output apparatus 302 outputs a control signal to the changeover control section 341, and on the basis of positional information of the speaker a as shown in Fig. 27B, it is set up in such a manner that the panel units 301, which are operated as microphones, are arranged in a row shape. In addition, the main control section 344 outputs a control signal to the input sound processing control section 343, to change sound pickup timing of each acoustic device 301 individually, in such a manner that a directivity of sound pickup becomes in a direction of the speaker a, and has them operated so as to combine sound pickup signals of respective acoustic devices 301. Furthermore, the main control section 344 outputs a control signal to the changeover control section 341 and the output sound processing control section 342, to have remaining acoustic devices 301 operated as normal loudspeakers.

In addition, in case that a person who says something is not fixed to the speaker a in a remote conference, when it is detected in the acoustic device 301 which is operated as a microphone that the speaker a started statement at certain timing during a period of a remote conference, the main control section 344 of the acoustic input and output apparatus 302 outputs a control signal to the changeover control section 341, to set up on the basis of positional information etc. of the panel unit 310 which detected voice sound of the speaker a, in such a manner that the panel units 310, which are operated as microphones, are arranged in a row shape. The main control section 344 changes sound pickup timing of each acoustic device 301 individually, in such a manner that a directivity of sound pickup becomes in a direction of the speaker a, and outputs a control signal to the input sound processing control section 43, so as to combine sound pickup signals of respective acoustic devices 301. In addition, the main control section 344 outputs a control signal to the input sound processing control section 344, to have remaining acoustic devices 301 operated as normal loudspeakers.

By this means, by the panel units 310 which are operated as microphones, it is possible to configure a microphone array in which a directivity of sound pickup is set up to a direction of the speaker a, and it is possible to surely collect only voice sound of the speaker a, and in addition, by other acoustic devices 301 which are operated as loudspeakers, it is possible to surely release voice sound collected by the acoustic input and output apparatus 302 installed in a separate conference room. Further, round sound from the front surface side loudspeaker 211fs into the front surface side microphone 211fm, and round sound from the rear surface side loudspeaker 211 rs into the rear surface side microphone 211 rm are negated by combining them in an adding manner, and thereby, it is possible to collect only voice sound of a speaker, surely and effectively.

Here, in case that the microphone array is formed by the panel units 310 (acoustic devices 301) in the acoustic input and output apparatus 302, it is possible to control a directivity of sound pickup by delaying detection timing of voice sound depending on a distance between each acoustic device 301 and a speaker.

Meanwhile, in case that the operations explained on the basis of Figs. 27A and 27B are set up in the acoustic input and output apparatus 302, the acoustic devices 301, which are operated as loudspeakers, may be switched at regular periods to be operated as microphones, or one stage portion of the acoustic devices 1 may be always operated as microphones. By this means, even in case that another conference attendant started statement, it is possible to collect voice of another speaker by immediately setting up the acoustic device in the vicinity of that speaker so as to be operated as a microphone, and changing arrangement of the microphone array.

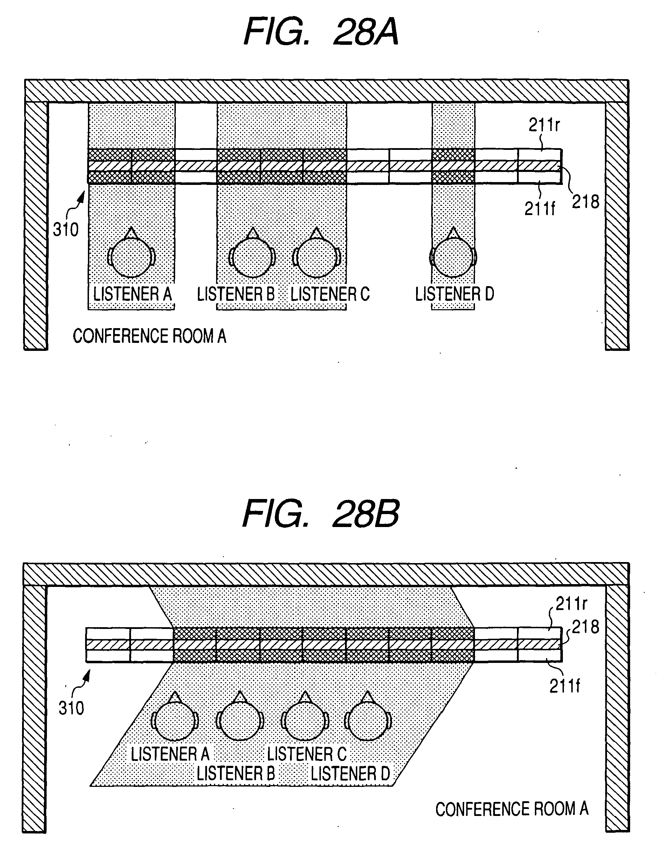

Fig. 28A and 28B are views which show a loudspeaker arrangement control example by detection of a position of a listener. In the remote conference system 303, in case that positions of listeners to the acoustic input and output apparatus 302 have been determined in advance, and in case that positions of listeners are detected by the human sensing sensors 345, it is possible to set up the panel units 310 (acoustic devices 301) in the vicinity of positions where positions of listeners are set up, so as to be operated as loudspeakers, by setting up the positions of listeners, and to set up other panel units 310 so as to be operated as microphones.

For example, as shown in Fig. 28A, in case that positions of listeners are fixed in a conference room A, the main control section 344 of the acoustic input and output apparatus 302 outputs a control signal to the changeover control section 341, to have the panel units 310 in the vicinity of a position of each listener operated as loudspeakers, and to have other panel units 310 operated as microphones.

In addition, in the conference room A, in case that listeners A through D, who are located as shown in Fig. 28A, are detected by the human sensing sensors 345 at certain timing, the main control section 344 of the acoustic input and output apparatus 302 outputs a control signal to the changeover control section, to set up the panel units 310 in the vicinity of positions of listeners so as to be operated as loudspeakers, and to set up other panel units 310 so as to be operated s microphones.

By this means, voice sound is released from a loud speaker in front of each listener (panel unit 310 which is operated as a loudspeaker), and therefore, it is possible for each listener to surely listen voice sound of a speaker who is saying something in a separate conference room.

Next, in the remote conference system 303, in case that positions of listeners to the acoustic input and output apparatus 302 have been determined in advance, and in case that positions of listeners are detected by the human sensing sensors 345, it is set up on the basis of this positional information of the speaker, in such a manner that a plurality of the acoustic devices 301, which are operated as loudspeakers, are arranged in a row shape and, in order for a directivity of sound pickup to becomes in a direction of a speaker, a loudspeaker array is formed in which sound pickup timing of each acoustic device 301 is adjusted, and thereby, it is possible to control a directivity of sound release.

For example, as shown in Fig. 28B, in case that positions of listeners in a conference room A are fixed, the main control section 344 of the acoustic input and output apparatus 302 outputs a control signal to the changeover control section 341, on the basis of positional information of each listener (listeners A through D), to set up a plurality of the panel units 310, which are operated as loudspeakers, in such a manner that they realize row shaped arrangement. In addition, the main control section 344 outputs a control signal to the output sound processing control section 342, and changes sound release timing of each acoustic device 301 individually, so as for a directivity of sound release to becomes in a direction of the listeners A through D, to have sound released from each panel unit 310. Further, the main control section 344 outputs a control signal to the changeover control section 341 and the input sound processing control section 343, to have remaining panel units 310 operated as normal microphones.

In addition, when the listeners A through D are detected by the human sensing sensors 345 at certain timing, the main control section 344 of the acoustic input and output apparatus 302 outputs a control signal to the changeover control section 341, on the basis of positional information of the listeners A through D, to have a plurality of the panel units 310 operated as loudspeakers, and form a loudspeaker array with appropriate arrangement, and to have sound from a separate acoustic input and output apparatus 302 released in the direction of the listeners A through D.

By this means, it is possible to configure a loudspeaker array in which a directivity of sound release is set up to the direction of the listeners A through D, by use of the panel units 310 which are operated as loudspeakers, and it is possible to surely release sounds to the direction of the listeners A through D, and in addition, it is possible to surely collect voice sound of a speaker utilizing the acoustic input and output apparatus 302 installed in a separate conference room, by use of other panel units 310 which are operated as microphones. Further, round sound from the front surface side loudspeaker 211fs into the front surface side microphone 211fm, and round sound from the rear surface side loudspeaker 211rs into the rear surface side microphone 211rm are negated by combining them in an adding manner, and thereby, it is possible to collect only voice sound of a speaker, surely and effectively.

Here, in case that a loudspeaker array is formed by use of the acoustic devices 301 in the acoustic input and output apparatus 302, it is possible to control a directivity of sound release, by adjusting output timing of voice sound, depending on a distance between each acoustic device 301 and a speaker.

In the above-described explanation, setup in case of using the remote conference system 303 in a normal conference mode is described, but in the remote conference system 303, it is possible to change over an operation of each acoustic device 301 in the acoustic input and output apparatus 302, by setting up different use modes depending on a use type of the acoustic input and output apparatus 302.

For example, in the remote conference system 303, a shared viewing/listening mode is set up, and an output of a sound output device such as a CD player and a computer (PC) is connected to an input terminal of each acoustic input and output apparatus 302, and thereby, it is possible to concurrently listen monaural sounds or stereophonic sounds (external input sounds), which are output from the sound output device, by each acoustic input and output apparatus 302. In case that the shared viewing/listening mode is set up, the main control section 344 of each acoustic input and output apparatus 302 controls the changeover control section 341, to have all of respective acoustic devices 1 operated as loudspeakers. Therefore, the acoustic input and output apparatus 302 outputs external input sounds from all acoustic devices 301, and therefore, each listener can listen impressive sounds.

In addition, by setting up a lecture mode in the remote conference system 303, it can be used as a sound pickup/sound amplification device for a lecture. That is, when this lecture mode is set up, the main control section 344 of the acoustic input and output apparatus 302 on a speaker (lecturer) side controls the changeover control section 341, to set up respective acoustic devices 301 so as to be all operated as microphones. In addition, the main control section 344 of the acoustic input and output apparatus 302 on a listener side controls the changeover control section 341, to set up respective acoustic devices 301 so as to be all operated as loudspeakers. Then, it is set up in such a manner that monaural sounds or stereophonic sounds, which are collected in the acoustic input and output apparatus 302 on the speaker side, are released from the acoustic input and output apparatus 302 on the listener side. Therefore, on the speaker side, a loudspeaker for hearing sounds of a listener side of a lecture is not disposed, and therefore, a speaker can concentrate on a lecture, and in addition, it is possible to surely collect voice of the speaker. In addition, in the acoustic input and output apparatus 302 on the listener side, all acoustic devices 301 are operated as loudspeakers, and therefore, listeners can listen sounds with feeling of being on the place, with appropriate sound volume.

In addition, by setting a concert mode in the remote conference system 303, it can be used as a PA system in case that a player and audience are present in separate halls. In case of setting up this mode, the signal input terminal 348 which is coupled to each acoustic device 1, and the signal output terminal 349 which is coupled to each acoustic device 301, are connected in such a manner that the acoustic device 301 which collects sounds in the acoustic input and output apparatus 302 installed on a player side, and the acoustic device 301 which releases sounds in the acoustic input and output apparatus 302 installed on an audience side, are arranged at corresponding positions.

When a user operates the operation section 346 and sets up this concert mode, the main control section 344 of the acoustic input and output apparatus 302 on the player side controls the changeover control section 341, to set up in such a manner that all acoustic devices 1 are operated as multi-channel microphones. In addition, the main control section 344 of the acoustic input and output apparatus 302 on the audience side controls the changeover control section 341, to set up in such a manner that all acoustic devices 301 are operated as multi-channel loudspeakers. Therefore, multi-channel sounds with a plenty of feelings of existing on the place, which are collected by a plurality of microphones in one acoustic input and output apparatus 302, can be released from a plurality of loudspeakers in the other acoustic input and output apparatus 302 as multi-channel sounds without change, and therefore, audience can enjoy sounds with high feeling of being on the place. For example, when voice sound of a player, who is present at a certain position, is collected by one acoustic input and output apparatus 302, the voice sound of the player is reproduced by a loudspeaker at a position which corresponds to the position where the voice sound of the player is collected, in another acoustic input and output apparatus 302.

Meanwhile, in case of setting up this concert mode, there is such a necessity that, in the remote conference system 303, acoustic devices 301 of each acoustic input and output apparatus 302 are wire-connected so as to input and output voice sound in an one-to-one manner.

In addition, the remote conference system (television conference system) 303 is not limited to such a type that two units of the acoustic input and output apparatuses 302 are connected in a one-to-one manner. It may be configured in such a manner that three or more units of the acoustic input and output apparatuses 302 are connected in a star type or a diagonal line type. A transmission method of sound signals between respective acoustic input and output apparatuses is arbitrary. It is free even if a plurality of transmission methods exist in a mixed manner.

For example, in case of installing the acoustic input and output apparatuses 302 in three conference rooms to carry out three-directional communication by setting up a three-directional communication mode in the remote conference system 303, the main control section of each acoustic input and output apparatus 302 controls the changeover control section 341, to set up in such a manner that it uses a right half of the flat capacitor type devices 211 formed in a panel shape, for exchange of sounds with one conference room, and uses a left half for exchange of sounds with the other conference room. By this means, in case of carrying out a remote conference in three conference rooms, it is possible to easily judge that a speaker of which conference room is saying something, and it is possible to smoothly proceed the remote conference.

In the remote conference system 303, when a use mode as described above is selected by the operation section 346 in any acoustic input and output apparatus 302, the main control section 344 of that acoustic input and output apparatus 302 reads out an arranging pattern of microphones and loudspeakers in the selected use mode from the storage section 347. Then, it outputs a control signal to the changeover control section 341, the output sound processing control section 342, and the input sound processing control section 343, to set up in such a manner that each flat capacitor type device 211 is operated as a microphone or a loudspeaker, on the basis of the arranging pattern read out from the storage section 347. In addition, the main control section 344 notifies information of this arranging pattern to the main control section 344 of another acoustic input and output apparatus 302 which configures the remote conference system 303.

Here, as described above, an arranging pattern for having the flat capacitor type devices 211 operated as microphones, and an arranging pattern for having the flat capacitor type devices 211 operated as loudspeakers, have been stored in advance in the storage section 347 of each acoustic input and output apparatus 302. In addition, as in the above-described lecture mode, arranging patterns of the flat capacitor type devices .211 differ between the acoustic input and output apparatus 302 on a speaker side and the acoustic input and output apparatus 302 on a listener side, and therefore, a concord arranging pattern, which corresponds to a notified arranging pattern, has been also stored in advance in the storage section 347.

Therefore, the main control section of another acoustic input and output apparatus 302, when it receives notification of arranging pattern information, reads out a concord arranging pattern which corresponds to this arranging pattern, from the storage section 347. Then, it outputs a control signal to the changeover control section 341, the output sound processing control section 342, and the input sound processing control section 343, to set up in such a manner that each flat capacitor type device 211 is operated as a microphone or a loudspeaker on the basis of the concord arranging pattern read out from the storage section 347.

In the above-described explanation, it is configured in such a manner that a sound wave in normal phase (loudspeaker sound) is output from the front surface side loudspeaker 211fs of the panel unit 310 of the acoustic input and output apparatus 302, and a sound wave in opposite phase (loudspeaker sound) is output from the rear surface side loudspeaker 211 rs, and a signal of voice sound collected by the front surface side microphone 211fm and a signal of voice sound collected by the rear surface side microphone 211rm are combined in an adding manner so that round sounds are negated, but the invention is not limited to this configuration, and it may be configured as follows.

For example, a sound wave in normal phase (loudspeaker sound) is output from the front surface side loudspeaker 211fs of the panel unit 310 of the acoustic input and output apparatus 302, and a sound wave in normal phase (loudspeaker sound) is also output from the rear surface side loudspeaker 211rs. In addition, it is configured in such a manner that a signal of voice sound collected by the front surface side microphone 21.1fm and a signal, which is in opposite phase to voice sound collected by the rear surface side microphone 211 rm are combined in an adding manner. Even in case of the suchlike configuration, it is possible to output only voice sound of a speaker by negating round sounds.

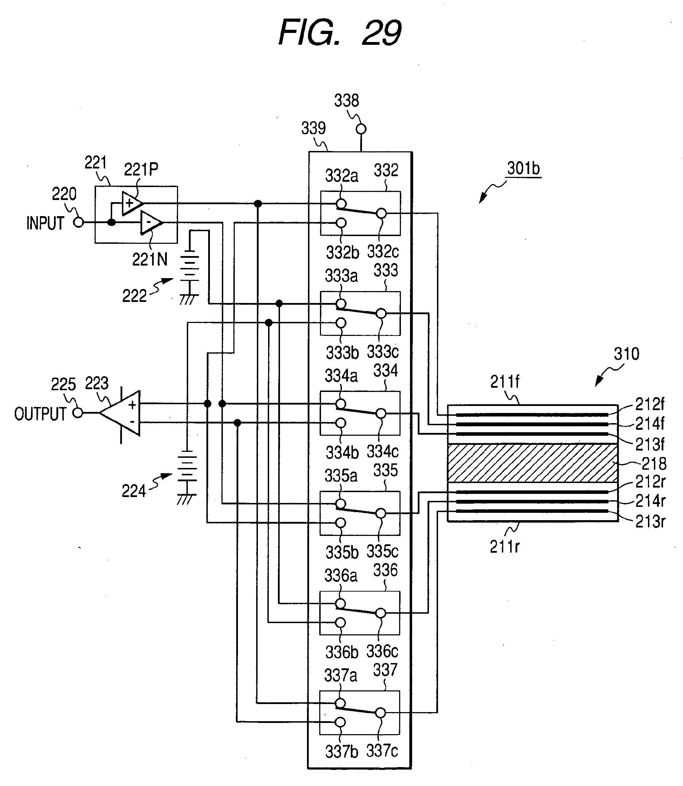

Concretely speaking, connection is carried out as shown in Fig. 29. The acoustic device 1b shown in Fig. 29 is identical to the acoustic device 1 shown in Figs. 23A and 23B, and therefore, the same reference numerals and signs as those of Figs. 23A and 23B are used, and in addition, a detailed explanation of each section will be omitted.

In order to have the acoustic input and output apparatus 302 carried out the above-described operation, the double-throw switches 332 through 337 of the changeover unit 339 are connected to each section as shown in Fig. 29. That is, as to the switch 332, a first terminal 332a is connected to an output side of the non-inversion voltage amplifier 221 P of the power amplifier 221, and a second terminal 332b is connected to a non-inversion input terminal of the differential amplifier 223, and a common terminal 332c is connected to a fixed electrode 212f of the flat capacitor type device 211f, respectively. As to the switch 333, a first terminal 333a is connected to the bias power supply 222, and a second terminal 333b is connected to the bias power supply 224, and a common terminal 333c is connected to the diaphragm 214f of the flat capacitor type device 211f, respectively. As to the switch 334, a first terminal 334a is connected to an output terminal of the inversion voltage amplifier 221 N of the power amplifier 221, and a second terminal 334b is connected to an inversion input terminal of the differential amplifier 223, and a common terminal 334c is connected to a fixed electrode 213f of the flat capacitor type device 211f, respectively.

As to the switch 335, a first terminal 335a is connected to an output side of the non-inversion voltage amplifier 221 N of the power amplifier 221, and a second terminal 335b is connected to a non-inversion input terminal of the differential amplifier 223, and a common terminal 335c is connected to a fixed electrode 212r of the flat capacitor type device 211 r, respectively. As to the switch 336, a first terminal 336a is connected to the bias power supply 222, and a second terminal 336b is connected to the bias power supply 224, and a common terminal 336c is connected to the diaphragm 214r of the flat capacitor type device 111r, respectively. As to the switch 337, a first terminal 337a is connected to an output terminal of the non-inversion voltage amplifier 221 P of the power amplifier 221, and a second terminal 337b is connected to an inversion input terminal of the differential amplifier 223, and a common terminal 337c is connected to a fixed electrode 213r of the flat capacitor type device 211 r, respectively.

Meanwhile, between the inversion input terminal and the non-inversion input terminal of the differential amplifier 223, a resistor, which is not shown in the figure, is connected for the purpose of suppressing influence of radiation noise etc.

In this manner, the acoustic input and output apparatus 302 is configured by a plurality of the acoustic devices 301 b each section of which is connected, and thereby, as shown in Fig. 25B, it is possible to cancel round sound even if the round sound is generated.

That is, loudspeaker sound in normal phase, which is released from the front surface side loudspeaker 211 fs, is rounded into and collected by the front surface side microphone 211fm, and loudspeaker sound in normal phase, which is released from the rear surface side loudspeaker 211 rs, is rounded into and collected by the rear surface side microphone 211rm. Then, a sound signal in normal phase which is output from the front surface side microphone 211rm, and a sound signal in opposite phase which is output from the rear surface side microphone 211rm, are combined in an adding manner by the differential amplifier 223, and thereby, round sounds are canceled, and it is possible to output only voice sound of a speaker.

In addition, a sound wave in normal phase (loudspeaker sound) is output from the front surface side loudspeaker 211fs of the panel unit 310 in the acoustic input and output apparatus 302, and a sound wave in normal phase (loudspeaker sound) is output also from the rear surface side loudspeaker 211rs. In addition, in the front surface side microphone 211fm, it is configured in such a manner that a signal of voice sound which is collected by the front surface side microphone 211fm, and a signal of voice sound which is collected by the rear surface side microphone 211rm, are combined in a subtracting manner. Even in case of the suchlike configuration, it is possible to negate round sounds and output only voice sound of a speaker.

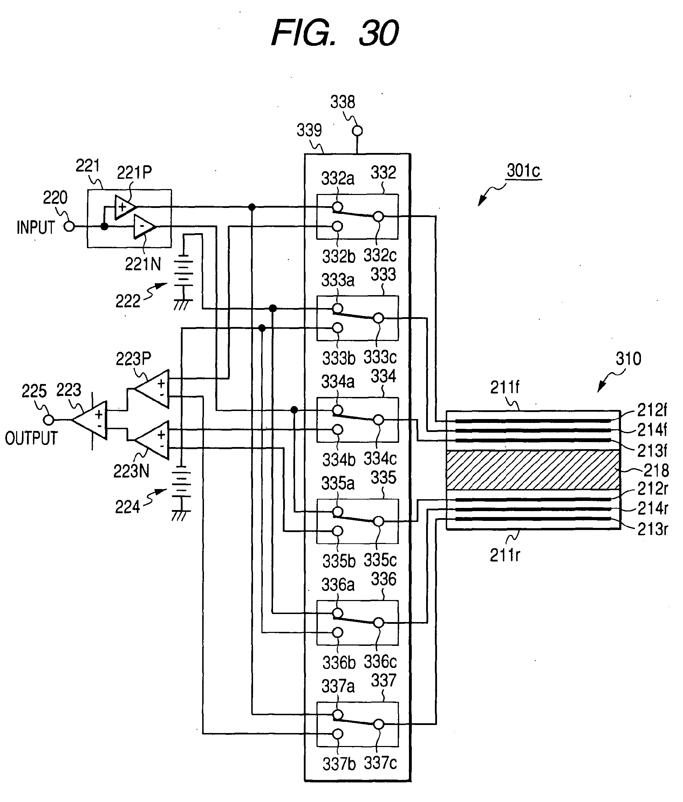

Concretely speaking, connection is carried out as shown in Fig. 30. Fig. 30 is a block diagram which shows a schematic configuration of the acoustic device. Meanwhile, an acoustic device 301 c shown in Fig. 30 is identical to the acoustic device 301 shown in Fig. 23A, except for such a matter that differential amplifiers 223P, 223N are added thereto so that connection of each section is changed, and therefore, the same reference numerals and signs as those of Fig. 23A are used, and in addition, a detailed explanation of each section will be omitted.

In order to have the acoustic input and output apparatus 302 carried out the above-described operation, the differential amplifiers 223P, 223N are added, and the double-throw type switches 332 through 337 of the changeover unit 339 are connected to each section, as shown in Fig. 30. That is, as to the switch 332, a first terminal 32a is connected to an output side of the non-inversion voltage amplifier 221 P of the power amplifier 221, and a second terminal 332b is connected to a non-inversion input terminal of the differential amplifier 223, and a common terminal 332c is connected to a fixed electrode 212f of the flat capacitor type device 211 f, respectively. As to the switch 333, a first terminal 333a is connected to the bias power supply 222, and a second terminal 333b is connected to the bias power supply 224, and a common terminal 333c is connected to the diaphragm 214f of the flat capacitor type device 211f, respectively. As to the switch 334, a first terminal 334a is connected to an output terminal of the inversion voltage amplifier 221 N of the power amplifier 221, and a second terminal 334b is connected to a non-inversion input terminal of the differential amplifier 223, and a common terminal 334c is connected to a fixed electrode 13f of the flat capacitor type device 211 f, respectively.

As to the switch 335, a first terminal 335a is connected to an output side of the non-inversion voltage amplifier 221 P of the power amplifier 221, and a second terminal 335b is connected to an inversion input terminal of the differential amplifier 223, and a common terminal 335c is connected to a fixed electrode 212r of the flat capacitor type device 211 r, respectively. As to the switch 336, a first terminal 336a is connected to the bias power supply 222, and a second terminal 336b is connected to the bias power supply 224, and a common terminal 336c is connected to the diaphragm 214r of the flat capacitor type device 211 r, respectively. As to the switch 337, a first terminal 337a is connected to an output terminal of the inversion voltage amplifier 221 N of the power amplifier 221, and a second terminal 337b is connected to a non-inversion input terminal of the differential amplifier 223, and a common terminal 337c is connected to a fixed electrode 213r of the flat capacitor type device 211 r, respectively. In addition, an output terminal of the differential amplifier 223P is connected to a non-inversion input terminal of the differential amplifier 223, and an output terminal of the differential amplifier 223N is connected to an inversion input terminal of the differential amplifier 223.

Meanwhile, between the inversion input terminals and the non-inversion input terminals of the differential amplifiers 223P, 223N, resistors, which are not shown in the figure, are connected for the purpose of suppressing influence of radiation noise etc.

In this manner, the acoustic input and output apparatus 302 is configured by a plurality of the acoustic devices 301 b each section of which is connected, and thereby, as shown in Fig. 25B, it is possible to cancel round sound even if the round sound is generated.

That is, loudspeaker sound in normal phase, which is released from the front surface side loudspeaker 11fs, is rounded into and collected by the front surface side microphone 11fm, and loudspeaker sound in normal phase, which is released from the rear surface side loudspeaker 211 rs, is rounded into and collected by the rear surface side microphone 211rm. Then, a sound signal in normal phase which is output from the front surface side microphone 211rm, and a sound signal in normal phase which is output from the rear surface side microphone 211 rm, are combined in a subtracting manner by the differential amplifiers 223P, 223N, 223, and thereby, round sounds are canceled.

Meanwhile, in case that the acoustic devices 301, 301 b, 301c are disposed in a mixed manner, even if voice sound, which is released by having two flat capacitor type devices of a certain acoustic device operated as loudspeakers, is collected by two flat capacitor type devices of another acoustic device which are operated as microphones, it is not possible to combine both signals collected in such a manner that they are negated. Therefore, there is such a necessity that the acoustic input and output apparatus 302 is configured so as to be equipped with a plurality of only any of the acoustic devices 301, 301b, 301c.

As above, in the remote conference system 303, it is set up in such a manner that the flat capacitor type devices 211 are operated as microphones or loudspeakers, in order to realize optimum arrangement of microphones and loudspeakers depending on positions of a speaker and listeners, and in addition, it has such a configuration that, even if voice sound, which is released from a speaker, is rounded into a microphone which collects statement voice sound of a speaker, it is possible to cancel it, and therefore, there is not such a case that acoustic feedback and echo are generated. In addition, in the remote conference system 303, an arranging pattern of microphones and loudspeakers which is set up in advance in each acoustic input and output apparatus 302, depending on a use mode which is set up by the operation section 346, or a concord arranging pattern which corresponds to this arranging pattern, is set up. Therefore, in the invention, it is possible to provide a remote conference system in which it is very easy to carry out setup of conference rooms, and it is possible to change numerical quantity of microphones and loudspeakers easily, depending on positions of a speaker and listeners who attend a conference, and it is possible to set up sound pickup and sound release to an appropriate state depending on a use status.

## Claims

1. A sound apparatus comprising:
a sound output that forms sound waves having opposite phases in a front direction and a rear direction, respectively;
a front microphone that collects the sound wave formed in the front direction;
a rear microphone that collects the sound wave formed in the rear direction; and
a signal processor that combines the signal collected by the front microphone and the signal collected by the rear microphone and outputs the resultant signal.

2. The sound apparatus according to claim 1, wherein the signal processor adjusts the level or frequency characteristic of at least one of the signal collected by the front microphone and the signal collected by the rear microphone.

3. A sound apparatus comprising:
a sound output that forms sound waves having opposite phases in a front direction and a rear direction, respectively; and
a microphone unit that includes a front microphone placed forward, a rear microphone placed backward, and a sound insulating layer placed between the front microphone and the rear microphone,
wherein the sound output and said microphone unit are combined in a panel shape.

4. The sound apparatus according to claim 3, wherein the sound output comprises a flat capacitor loudspeaker having a flat diaphragm, and each of the front microphone and the rear microphone comprises a flat capacitor microphone having a flat diaphragm.

5. The sound apparatus according to claim 4, wherein
the flat loudspeaker comprises two layers of a front flat loudspeaker and a rear flat loudspeaker,
the front flat loudspeaker is placed so that a flat diaphragm of the front flat loudspeaker becomes the same plane as the flat diaphragm of the front microphone, and
the rear flat loudspeaker is placed so that a flat diaphragm of the rear flat loudspeaker becomes the same plane as the flat diaphragm of the rear microphone.

6. The sound apparatus according to claim 3 further comprising a signal processor that combines the signal collected by the front microphone and the signal collected by the rear microphone and outputs the resultant signal.

7. The sound apparatus according to claim 6, wherein the signal processor adjusts the level or frequency characteristic of at least one of the signal collected by the front microphone and the signal collected by the rear microphone.

8. A teleconference system, wherein a sound apparatus according to claim 1, 6, or 7 is installed in each of rooms and the sound apparatus are connected so that an output signal of the signal processor of one sound apparatus is input to voice output of another sound apparatus.

9. An acoustic apparatus comprising:
a main unit that includes a main acoustic output unit which converting an input signal into a sound wave and reproduce the sound wave, and a main sound pickup which collects a sound wave propagated from an installation space of the main unit and outputs a signal corresponding to the collected sound wave;
a sub unit that includes a sub acoustic output unit which reproduces a sound wave which is in opposite phase to that of the sound wave reproduced by the main acoustic output unit, and a sub sound pickup which collects a sound wave propagated from an installation space in which the sub unit is installed and a sound wave from the installation space of the main unit is not propagated and outputs a signal corresponding to the sound wave collected by the sub sound pickup;
a signal combining unit that combines the signal output form the main sound pickup and the signal output from the sub sound pickup and outputs a resultant signal thereof.

10. An acoustic apparatus comprising:
a main unit that includes a main acoustic output unit which converting an input signal into a sound wave and reproduce the sound wave, and a main sound pickup which collects a sound wave propagated from an installation space of the main unit and outputs a signal corresponding to the collected sound wave;
a sub unit that includes a sub acoustic output unit which reproduces a sound wave which is in same phase to that of the sound wave reproduced by the main acoustic output unit, and a sub sound pickup which collects a sound wave propagated from an installation space in which the sub unit is installed and a sound wave from the installation space of the main unit is not propagated and outputs a.signal corresponding to the sound wave collected by the sub sound pickup;
a signal combining unit that combines the signal output form the main sound pickup and the signal output from the sub sound pickup and outputs a resultant signal thereof.

11. An acoustic apparatus comprising:
a main unit that includes a main acoustic output unit which converting an input signal into a sound wave and reproduce the sound wave, and a main sound pickup which collects a sound wave propagated from an installation space of the main unit and outputs a signal corresponding to the collected sound wave;
a sub unit that includes a sub acoustic output unit which reproduces a sound wave which is in same phase to that of the sound wave reproduced by the main acoustic output unit, and a sub sound pickup which collects a sound wave propagated from an installation space in which the sub unit is installed and a sound wave from the installation space of the main unit is not propagated and outputs a signal corresponding to the sound wave collected by the sub sound pickup;
a signal combining unit that outputs a differential signal of the signal output from the main sound pickup and the signal output from the sub sound pickup.

12. An acoustic device comprising:
a flat capacitor type device that includes a flat plate shaped fixed electrode and a flat plate shaped diaphragm arranged opposite to the fixed electrode;
a sound reproducing signal amplifier that amplifies a first signal and applies the amplified first signal to the fixed electrode to vibrate the diaphragm;
a sound pickup signal amplifier that amplifies and outputs a second signal output from the fixed electrode; and
a changeover switch for alternatively connecting the fixed electrode to the.sound reproducing signal amplifier and the sound pickup signal amplifier,
wherein when the changeover switch connects the fixed electrode to the sound reproducing signal amplifier, the flat capacitor type device functions as a loudspeaker which reproduces sound waves by vibration of the diaphragm corresponding to the first signal, and
wherein when the changeover switch connects the fixed electrode to the sound pickup signal amplifier, the flat capacitor type device functions as a microphone which outputs, to the sound pickup amplifier, the second signal generated when electrostatic capacitance of the fixed electrode is changed by vibration of the diaphragm in response to a sound wave collected by the diaphragm.

13. The acoustic device according to claim 12 further comprising a bias unit which applies different bias voltages to the diaphragm in case that the changeover switch connects the fixed electrode to the sound reproducing signal amplifier, and in case that the changeover switch connects the fixed electrode to the sound pickup signal amplifier.

14. An acoustic input/output apparatus comprising:
a plurality of acoustic devices according to claim 12 or 13, wherein flat capacitor type devices of the plurality of acoustic devices are arranged in a panel shape; and
a controller that outputs control signals to the plurality of changeover switches to operate the plurality of flat capacitor type devices as a microphone or a loudspeaker, respectively.

15. The acoustic input/output apparatus according to claim 14, wherein the controller changes numerical quantity and arrangement of the flat capacitor type devices functioning as the microphone in accordance with a volume or a position of voice sound which is detected by the flat capacitor type devices functioning as the microphone.

16. A remote conference system comprising:
a plurality of acoustic input/output apparatuses according to claim 14 which are arranged in different spaces, respectively, and connected in such a manner that an output signal of the sound pickup amplifier in each acoustic input/output apparatus is input as an input signal of the sound release amplifier of another acoustic device.

17. The remote conference system according to claim 16, wherein
each of the acoustic input/output apparatus includes a pattern storage for storing at least one concord pattern associated with an arranging pattern of the flat capacitor type devices functioning as microphones and flat capacitor type devices functioning as loudspeakers,
the remote conference system comprises a pattern selector for selecting the arranging pattern,
the controller of one of the acoustic input/output apparatuses, when the arranging pattern of the one is selected by the pattern selector, notifies the selected arranging pattern of the other of the acoustic input/output apparatuses and sets up the flat capacitor type devices of the other to the selected arranging pattern, and
when the other of the acoustic input/output apparatuses receives the notification from the one, the other of the acoustic input/output apparatuses sets up the flat capacitor type device to the concord pattern associated with the selected arranging pattern.

18. An acoustic device comprising:
a pair of flat capacitor type devices, each including a flat plate shaped fixed electrode and a flat plate shaped diaphragm arranged opposed to the fixed electrode;
an acoustically insulating layer that is disposed between the pair of flat capacitor type devices to suppress an acoustic propagation therebetween;
a sound release signal amplifier that amplifies a first signal and applies the amplified first signal to the fixed electrode of one of the flat capacitor type devices and amplifies a second signal in opposite phase to the first input signal and applies the amplified second signal to the fixed electrode of the other flat capacitor type device to vibrate the fixed electrodes;
a sound pickup signal amplifier that combines third signals amplifies and output the combined signals; and
a changeover switch for alternatively connecting the fixed electrodes to the sound reproducing signal amplifier and the sound pickup signal amplifier,
wherein when the changeover switch connects the fixed electrodes to the sound reproducing signal amplifier, the flat capacitor type devices function as loudspeakers which reproduce sound waves having opposite phases by vibrations of the diaphragms respectively corresponding to the first and second signals, and
wherein when the changeover switch connects the fixed electrodes to the sound pickup amplifier, the flat capacitor type devise function as microphones which output, to the sound pickup amplifier, the third signals which are respectively generated when electrostatic capacitance of each fixed electrode is changed by vibration of each diaphragm in response to a sound wave collected by the diaphragm.

19. An acoustic device comprising:
a pair of flat capacitor type devices, each including a flat plate shaped fixed electrode and a flat plate shaped diaphragm arranged opposed to the fixed electrode;
an acoustically insulating layer that is disposed between the pair of flat capacitor type devices to suppress an acoustic propagation therebetween;
a sound release signal amplifier that amplifies a first signal and applies the amplified first signal to the fixed electrodes;
a sound pickup signal amplifier that combines second and third signals amplifies and output the combined second and third signals; and
a changeover switch for alternatively connecting the fixed electrodes to the sound reproducing signal amplifier and the sound pickup signal amplifier,
wherein when the changeover switch connects the fixed electrodes to the sound reproducing signal amplifier, the flat capacitor type devices function as loudspeakers which reproduce sound waves having same phases by vibrations of the diaphragms respectively corresponding to the first signal, and
wherein when the changeover switch connects the fixed electrodes to the sound pickup amplifier, the flat capacitor type devise function as microphones which output, to the sound pickup amplifier, the second signal generated when electrostatic capacitance of the fixed electrode of one of the flat capacitor type device is changed by vibration of the diaphragm in response to a first sound wave collected by the diaphragm, and output, to the sound pickup amplifier, the third signal generated when electrostatic capacitance of the fixed electrode of the other flat capacitor type device is changed by vibration of the diaphragm in response to a second sound wave having an opposite phase to the first sound wave and collected by the diaphragm.

20. An acoustic device comprising:
a pair of flat capacitor type devices, each including a flat plate shaped fixed electrode and a flat plate shaped diaphragm arranged opposed to the fixed electrode;
an acoustically insulating layer that is disposed between the pair of flat capacitor type devices to suppress an acoustic propagation therebetween;
a sound release signal amplifier that amplifies a first signal and applies the amplified first signal to the fixed electrodes;
a sound pickup signal amplifier that outputs a differential signal of a second signal output from the fixed electrode of one of the flat capacitor type device and a third signal output from the fixed electrode of the other capacitor type device;
combines third signals amplifies and output the combined signals; and
a changeover switch for alternatively connecting the fixed electrodes to the sound reproducing signal amplifier and the sound pickup signal amplifier,
wherein when the changeover switch connects the fixed electrodes to the sound reproducing signal amplifier, the flat capacitor type devices function as loudspeakers which reproduce sound waves having same phases by vibrations of the diaphragms respectively corresponding to the first signal, and
wherein when the changeover switch connects the fixed electrodes to the sound pickup amplifier, the flat capacitor type devise function as microphones which output, to the sound pickup amplifier, the second and third signals which are respectively generated when electrostatic capacitance of each fixed electrode is changed by vibration of each diaphragm in response to a sound wave collected by the diaphragm.
